# EUROPÄISCHE PATENTSCHRIFT

(11) **EP 4 650 850 B1**
(45) Veröffentlichungstag und Bekanntmachung des Hinweises auf die Patenterteilung: **21.10.2026**
(21) Anmeldenummer: 25174525.3
(22) Anmeldetag: 06.05.2025
(51) Int. Cl.: G02B 7/198, H01Q 3/20, G02B 7/182, G02B 7/22, G02B 7/24

(54) **VORRICHTUNG ZUR UMLENKUNG EINES LICHT- UND/ODER MIKROWELLENSTRAHLS MIT AUTOMATISCHER STRAHLNACHFÜHRUNG**
DEVICE FOR DEFLECTING A LIGHT AND/OR MICROWAVE BEAM WITH AUTOMATIC BEAM TRACKING
DISPOSITIF DE DÉVIATION D'UN FAISCEAU LUMINEUX ET/OU HYPERFRÉQUENCE À POURSUITE AUTOMATIQUE DU FAISCEAU

(30) Priorität: 17.05.2024 DE 102024113919
(43) Veröffentlichungstag der Anmeldung: 19.11.2025
(73) Patentinhaber: Max-Planck-Gesellschaft zur Förderung der Wissenschaften e.V., 80539 München (DE)
(72) Erfinder: KAUNERT, Karlheinz, 85748 Garching (DE)
(74) Vertreter: v. Bezold & Partner Patentanwälte - PartG mbB

(56) Entgegenhaltungen:
- WO-A1-98/18394
- DE-A1- 1 948 798
- US-A- 3 528 424

## Beschreibung

Die Erfindung betrifft eine Vorrichtung zur Umlenkung eines Licht- und/oder Mikrowellenstrahls sowie ein System mit einer solchen Vorrichtung. Anwendungsmöglichkeiten der Erfindung liegen bspw. in der Führung eines Licht- und/oder Mikrowellenstrahls von einem Punkt zu einem relativ dazu beweglichen anderen Punkt, beispielsweise bei der Führung eines Licht- und/oder Mikrowellenstrahls von einem Fensterflansch einer Vakuumkammer zu einem relativ dazu beweglichen Detektor.

Vorrichtungen zur Umlenkung von Licht- und/oder Mikrowellenstrahlen sind im Stand der Technik grundsätzlich bekannt. Ferner existieren auch Systeme, welche eine bewegliche Strahlführung ermöglichen, bspw. mittels beweglicher Reflektoren.

In diesem Zusammenhang sei bspw. auf die US 3,528,424 A verwiesen, die ein chirurgisches Lasermesser offenbart, bei dem ein Laserstrahl in einer beweglichen Führungsstruktur geführt wird. Die Führungsstruktur umfasst eine gelenkige Verbindung zwischen zwei Leitungsabschnitten, wobei die gelenkige Verbindung dazu ausgebildet ist, den Laserstrahl bei einer Verschwenkung der beiden Leitungsabschnitte relativ zueinander automatisch mitzuführen. Hierzu weist die gelenkige Verbindung eine Reflexionsfläche auf, deren Bewegung über eine Langlochführung an die Bewegung der Leitungsabschnitte gekoppelt ist. Neben der auskragenden Konstruktion ist bei der Langlochführung nur ein Linienkontakt zwischen den beweglichen Teilen vorhanden, wodurch die Konstruktion verschleißanfällig ist und aufgrund der Abnutzung zum Verklemmen neigt. Außerdem gibt es keine Abstützung der Teile senkrecht zur Bewegungsrichtung, sodass die dadurch auftretenden Momente den Verschleiß zusätzlich erhöhen. US 3 528 424 A offenbart eine Vorrichtung mit zwei Befestigungsschenkeln, einer schwenkbar gelagerten Reflektoreinrichtung und einer Koppeleinrichtung zur Kopplung der Bewegung der Schenkel und der Reflektoreinrichtung, so dass bei einem Verschwenken des ersten und zweiten Befestigungsschenkels relativ zueinander um einen Schwenkwinkel die Reflektoreinrichtung um den halben Schwenkwinkel relativ zu den Befestigungsschenkeln verschwenkt wird.

Aufgabe der Erfindung ist es, eine verbesserte Technik zur (beweglichen) Umlenkung eines Licht- und/oder Mikrowellenstrahls bereitzustellen, die vorzugsweise die Nachteile bisheriger Lösungen vermeidet. Bevorzugt ist es eine Aufgabe der Erfindung, eine entsprechende Technik bereitzustellen, mittels derer ein Licht- und/oder Mikrowellenstrahl möglichst zuverlässig und verschleißarm umgelenkt werden kann, dass auch bei einer Änderung der relativen Position zwischen Quelle und Ziel eine zuverlässige Strahlführung gewährleistet werden kann.

Diese Aufgaben werden durch eine Vorrichtung und ein System mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Aspekt der vorliegenden Offenbarung wird eine Vorrichtung zur Umlenkung eines Lichtstrahls (z. B. eines Laserstrahls) und/oder eines Mikrowellenstrahls (z. B. eines Maserstrahls) bereitgestellt.

Die Vorrichtung weist einen (z. B. länglichen) ersten Befestigungsschenkel zur Befestigung an einem ersten Strahlführungsteil (z. B. an einem ersten Strahlführungsrohr) auf.

Ferner weist die Vorrichtung einen (z. B. länglichen) zweiten Befestigungsschenkel zur Befestigung an einem zweiten Strahlführungsteil (z. B. an einem zweiten Strahlführungsrohr) auf.

Der erste Befestigungsschenkel und der zweite Befestigungsschenkel sind (z. B. mittels eines Hauptdrehgelenks) gelenkig miteinander verbunden, vorzugsweise derart, dass der erste und zweite Befestigungsschenkel relativ zueinander verschwenkbar sind.

Die Vorrichtung weist ferner eine, vorzugsweise schwenkbar gelagerte, Reflektoreinrichtung zur Umlenkung des Licht- und/oder Mikrowellenstrahls auf. Beispielsweise kann die Reflektoreinrichtung an dem Hauptdrehgelenk angelenkt sein. Bevorzugt umfasst die Reflektoreinrichtung eine (z. B. ebene oder gekrümmte) Reflexionsfläche (z. B. eine Reflexionsfläche eines metallischen und/oder dielektrischen Spiegels).

Die Vorrichtung weist weiterhin eine Koppeleinrichtung auf. Mittels der Koppeleinrichtung sind die Reflektoreinrichtung, der erste Befestigungsschenkel und der zweite Befestigungsschenkel miteinander bewegungsgekoppelt verbunden. Beispielsweise kann dadurch ein Bewegen einer der vorgenannten Komponenten aufgrund der Kopplung über die Koppeleinrichtung auch ein Bewegen der beiden anderen Komponenten bewirken.

Bevorzugt sind die Reflektoreinrichtung, der erste Befestigungsschenkel und der zweite Befestigungsschenkel dabei miteinander bewegungsgekoppelt derart verbunden, dass bei einem Verschwenken des ersten Befestigungsschenkels und des zweiten Befestigungsschenkels relativ zueinander um einen (z. B. bestimmten) Schwenkwinkel (z. B. um eine Hauptschwenkachse herum), die Reflektoreinrichtung um den halben Schwenkwinkel relativ zum ersten Befestigungsschenkel und/oder relativ zum zweiten Befestigungsschenkel (z. B. mit)verschwenkt wird. Werden bspw. die beiden Befestigungsschenkel (z. B. um die Hauptschwenkachse) um einen Schwenkwinkel von 30° relativ zueinander verschwenkt, so kann die Reflektoreinrichtung - vermittelt durch die Koppeleinrichtung - bspw. um 15° relativ zum ersten und/oder zweiten Befestigungsschenkel (z. B. mit)verschwenkt werden. Bevorzugt ist dabei eine Hauptachse der Reflexionsfläche und/oder eine Senkrechte zu einer Erstreckungsebene der Reflexionsfläche immer winkelhalbierend zwischen dem ersten und zweiten Befestigungsschenkel angeordnet und/oder parallel zu einer Winkelhalbierenden eines Scheitelwinkels des ersten und zweiten Befestigungsschenkels orientiert.

Die Vorrichtung zeichnet sich ferner dadurch aus, dass die Koppeleinrichtung einen (z. B. länglichen und/oder einseitig angelenkten) Koppelarm zum Verschwenken der Reflektoreinrichtung aufweist, wobei der Koppelarm (z. B. zumindest abschnittsweise) in einem (z. B. geraden) Führungsabschnitt (z. B. in einem Führungsloch und/oder in einem Führungskanal) der Reflektoreinrichtung entlang einer Führungsrichtung verschiebbar geführt ist. Weiterhin ist vorgesehen, dass der Koppelarm eine Haupterstreckungsrichtung (z. B. Hauptlängsachse) aufweist, die entlang der Führungsrichtung orientiert ist. Beispielweise kann die Haupterstreckungsrichtung des Koppelarms parallel zur Führungsrichtung orientiert sein. Als Haupterstreckungsrichtung kann hierbei bspw. die Richtung der längsten Erstreckung des Koppelarms verstanden werden.

Im Gegensatz zu Führungen mittels Linienkontakten bietet die vorliegende Lösung den Vorteil, dass eine größere Kontaktfläche bzw. eine bessere Abstützung der geführten Bauteile ermöglicht wird und dadurch eine stabilere bzw. zuverlässigere Führung erreicht werden kann. Im Gegensatz zu bekannten Langlochführungen mit Linienkontakt ermöglicht die vorliegende Ausgestaltung eine flächige Führung und/oder die Verwendung von Wälzlagern, wodurch ein verschleißarmer Betrieb realisiert werden kann bzw. einem abnutzungsbedingten Verklemmen bzw. einer abnutzungsbedingten ungenauen Positionieren entgegengewirkt werden kann. Darüber hinaus ermöglicht die vorgenannte Koppelarmführung, wie im Folgenden noch eingehender beschrieben wird, eine insgesamt sehr kompakte und damit platzsparende Ausgestaltung der Vorrichtung.

Gemäß einem ersten Aspekt kann zwischen dem Koppelarm und dem Führungsabschnitt (z. B. zumindest abschnittsweise) ein Flächenkontakt bestehen. Beispielsweise kann zwischen dem Koppelarm und dem Führungsabschnitt, vorzugsweise an mehreren Stellen, eine flächige und/oder zweidimensionale Kontaktfläche vorliegen. Dies ermöglicht auf vorteilhafte Weise eine besonders zuverlässige Führung des Koppelarms.

Zudem oder alternativ kann zwischen dem Koppelarm und dem Führungsabschnitt ein Wälzlager (z. B. ein Linearkugellager und/oder eine Kugelumlaufhülse) angeordnet sein. Bevorzugt weist das Wälzlager dabei zumindest abschnittsweise einen axialen und/oder entlang der Führungsrichtung orientierten Kugelumlauf auf. Auf vorteilhafte Weise kann dadurch eine möglichst reibungsarme Führung der translatorischen Bewegung des Koppelarms erreicht werden.

Nach einem weiteren Aspekt kann die Koppeleinrichtung ferner einen (z. B. gebogenen und/oder abgewinkelten) ersten Koppelschenkel aufweisen. Der erste Koppelschenkel kann mit dem ersten Befestigungsschenkel (z. B. mittels eines ersten Wälzlagers, insbesondere Rollenlagers) gelenkig (z. B. schwenkbar) verbunden sein. Beispielsweise können der erste Koppelschenkel und der erste Befestigungsschenkel über ein, vorzugsweise von dem Hauptdrehgelenk beabstandetes, erstes Drehgelenk (z. B. aufweisend das erste Wälzlager) gelenkig miteinander verbunden sein.

Weiterhin kann die Koppeleinrichtung einen (z. B. gebogenen und/oder abgewinkelten) zweiten Koppelschenkel aufweisen. Der zweite Koppelschenkel kann mit dem zweiten Befestigungsschenkel (z. B. mittels eines zweiten Wälzlagers, insbesondere Rollenlagers) gelenkig (z. B. schwenkbar) verbunden sein. Beispielsweise können der zweite Koppelschenkel und der zweite Befestigungsschenkel über ein, vorzugsweise von dem Hauptdrehgelenk beabstandetes, zweites Drehgelenk (z. B. aufweisend das zweite Wälzlager) gelenkig miteinander verbunden sein.

Ferner kann die Koppeleinrichtung einen (z. B. gleitgelagerten) Gelenkbolzen aufweisen, mittels dessen der erste Koppelschenkel und der zweite Koppelschenkel gelenkig miteinander verbunden sind. Beispielsweise können der erste und zweite Koppelschenkel jeweils ein Durchgangsloch aufweisen, die fluchtend zueinander angeordnet sind und in denen (z. B. mittels einer Gleitlagerung) der Gelenkbolzen aufgenommen ist. Weiterhin kann der Koppelarm der Koppeleinrichtung an dem Gelenkbolzen (z. B. über ein Koppelarm-Drehlager) angelenkt sein. Beispielsweise kann auch der Koppelarm ein, vorzugsweise fluchtend zu den Durchgangslöchern des ersten und zweiten Koppelschenkels angeordnetes, Durchgangsloch aufweisen, in dem der Gelenkbolzen (z. B. mittels einer Gleitlagerung) aufgenommen ist. Bevorzugt überlappen der Koppelarm, der erste Koppelschenkel und der zweite Koppelschenkel somit zumindest abschnittsweise miteinander, vorzugsweise in einer Blickrichtung entlang einer Haupterstreckungsrichtung des Gelenkbolzens. Auf vorteilhafte Weise kann dadurch ein Mitführen des Koppelarms realisiert werden, das im Zusammenwirken mit dem Führungsabschnitt der Reflektoreinrichtung schwenkbar gelagerten Reflektoreinrichtung zu einer Zwangsbedingung für die Relativbewegungen der Komponenten zueinander führt, wodurch die Reflektoreinrichtung bei einem Verschwenken der beiden Befestigungsschenkel relativ zueinander auf der entsprechenden Winkelhalbierenden mitgeführt wird.

Gemäß einem weiteren Aspekt kann der (z. B. länglichen) Koppelarm ein (z. B. am Gelenkbolzen angelenktes) erstes Koppelarmende und ein, vorzugsweise dem ersten Koppelarmende entgegengesetztes, (z. B. freies) zweites Koppelarmende aufweisen. Vorzugsweise erstreckt sich der Gelenkbolzen durch das erste Koppelarmende und/oder der Gelenkbolzen ist bevorzugt durch das erste Koppelarmende hindurchgeführt. Beispielsweise kann das erste Koppelarmende dazu ein (bzw. das) Durchgangsloch aufweisen. Zudem oder alternativ kann das zweite Koppelarmende (z. B. zumindest abschnittsweise) in dem Führungsabschnitt (z. B. entlang der Führungsrichtung) verschiebbar geführt sein. Beispielsweise kann das zweite Koppelarmende und/oder der Koppelarm somit relativ zur Reflektoreinrichtung bewegbar (z. B. verschiebbar) sein. Auf vorteilhafte Weise kann dadurch eine zuverlässige Bewegungskopplung der Komponenten gewährleistet werden.

Zudem oder alternativ kann der Koppelarm (z. B. immer) zwischen dem ersten Koppelschenkel und dem zweiten Koppelschenkel winkelhalbierend (z. B. bezüglich des Scheitelwinkels zwischen dem ersten und zweiten Befestigungsschenkel) angeordnet und/oder geführt sein. Beispielsweise kann sich eine Längsachse des Koppelarms (z. B. immer) entlang der Winkelhalbierenden des Scheitelwinkels des ersten und zweiten Befestigungsschenkels erstrecken. Auf vorteilhafte Weise kann dadurch ein zuverlässiges Nachführen der Reflektoreinrichtung erreicht werden.

Zudem oder alternativ kann der Koppelarm (z. B. zumindest abschnittsweise) zwischen dem Gelenkbolzen und der Reflektoreinrichtung angeordnet sein. Beispielsweise kann das erste Koppelarmende des Koppelarms an dem Gelenkbolzen angeordnet sein und/oder das zweite Koppelarmende an der Reflektoreinrichtung angeordnet sein. Auf vorteilhafte Weise kann dadurch eine möglichst kompakte Nachführung der Reflektoreinrichtung erreicht werden.

Nach einem weiteren Aspekt kann der Koppelarm in dem Führungsabschnitt gleitgelagert sein. Beispielsweise kann der Führungsabschnitt dazu eine Gleitlagerbuchse aufweisen. Auf vorteilhafte Weise kann dadurch ein besonders verschleißarmer Betrieb ermöglicht werden.

Zudem oder alternativ kann der Führungsabschnitt in einer Ebene senkrecht zur Haupterstreckungsrichtung (z. B. umfangsseitig) geschlossen sein. Beispielsweise kann der Führungsabschnitt eine runde oder mehrseitige Innenkontur aufweisen. Auf vorteilhafte Weise kann dadurch eine besonders zuverlässige Führung erreicht werden.

Zudem oder alternativ kann der Führungsabschnitt den Koppelarm in einer (bzw. der) Ebene senkrecht zur Haupterstreckungsrichtung umgeben (z. B. umschließen). Beispielsweise kann der Koppelarm in der entsprechenden Ebene von allen Seiten von dem Führungsabschnitt umgeben sein. Auch dies ermöglicht wiederum auf vorteilhafte Weise eine besonders zuverlässige Führung.

Gemäß einem weiteren Aspekt kann ein Abschnitt des Koppelarms, der in dem Führungsabschnitt verschiebbar geführt ist, (z. B. das zweite Koppelarmende) zumindest abschnittsweise stabförmig (z. B. quaderförmig, blockförmig und/oder zylinderförmig) ausgebildet ist sein. Bevorzugt ist der entsprechende Abschnitt dabei aus Vollmaterial hergestellt. Es ist allerdings auch möglich, dass der Abschnitt als (z. B. geschlossenes) Hohlprofil ausgebildet ist. Auf vorteilhafte Weise kann dadurch eine möglichst sichere und stabile Führung der Reflektoreinrichtung gewährleistet werden.

Zudem oder alternativ kann ein (bzw. der) Abschnitt des Koppelarms, der in dem Führungsabschnitt verschiebbar geführt ist, in einer Ebene senkrecht zur Haupterstreckungsrichtung eine Außenkontur aufweisen, die formentsprechend zu einer Innenkontur des Führungsabschnitts in der Ebene senkrecht zur Haupterstreckungsrichtung ausgebildet ist. Beispielsweise kann im Fall das der Führungsabschnitt eine runde Innenkontur aufweist, der Koppelarm ebenfalls eine runde Außenkontur aufweisen, deren Durchmesser bevorzugt an den Durchmesser der Innenkontur angepasst ist.

Zudem oder alternativ kann der Führungsabschnitt den Koppelarm an mindestens drei (z. B. verschiedenen und/oder räumlich getrennten) Stellen stützen. Beispielweise kann der Koppelarm über mehrere Punktkontakte von Kugeln eines zwischen dem Führungsabschnitt und dem Koppelarm angeordneten Wälzlagers abgestützt sein.

Zudem oder alternativ kann der (oder ein) Abschnitt des Koppelarms, der in dem Führungsabschnitt verschiebbar geführt ist, (z. B. das zweite Koppelarmende) zumindest abschnittsweise entlang der Haupterstreckungsrichtung (z. B. Längsrichtung) einen im Wesentlichen konstanten Querschnitt (z. B. in Form eines Rechtecks mit zwei geraden Längskanten und zwei nach außen gewölbten Querkanten) aufweisen. Auf vorteilhafte Weise kann dadurch ein möglichst großflächiger Flächenkontakt zwischen Koppelarm und Führungsabschnitt erreicht werden.

Zudem oder alternativ kann der Koppelarm entlang der Führungsrichtung mindestens dreiseitig, vorzugsweise mindestens vierseitig, in dem Führungsabschnitt geführt sein. Beispielsweise kann der (z. B. quaderförmige) Koppelarm und/oder der (z. B. quaderförmige) Abschnitt des Koppelarms, der in dem Führungsabschnitt verschiebbar geführt ist, zwei seitliche Kontaktflächen und/oder eine (z. B. obere) Grundkontaktfläche und/oder eine (z. B. untere) Deckkontaktfläche aufweisen. Bevorzugt stehen dabei alle der vorgenannten Kontaktflächen zumindest abschnittsweise mit dem Führungsabschnitt in Kontakt und/oder sind an dem Führungsabschnitt geführt. Auf vorteilhafte Weise kann dadurch eine möglichst allseitige bzw. flächige Führung des Koppelarms erreicht werden.

Zudem oder alternativ kann der Koppelarm und/oder der Führungsabschnitt mehrere (z. B. parallel zur Führungsrichtung orientierte) Führungsflächen aufweisen. Beispielsweise kann eine jeweilige Flächennormale der jeweiligen Führungsflächen jeweils senkrecht zur Führungsrichtung orientiert sein. Bevorzugt weisen die mehreren Führungsflächen zwei (z. B. parallel zueinander orientierte) seitliche Führungsflächen und/oder eine (z. B. senkrecht zu den zwei seitlichen Führungsflächen orientierte) Grundführungsfläche und/oder eine (z. B. senkrecht zu den zwei seitlichen Führungsflächen und parallel zur Grundführungsfläche orientierte) Deckführungsfläche auf. Die mehreren Führungsflächen können somit bspw. einen (z.B. umfangsseitig geschlossenen) Führungskanal für den Koppelarm bilden. Bevorzugt ist dabei eine der zwei seitlichen Kontaktflächen des Koppelarms an einer der zwei seitlichen Führungsflächen des Führungsabschnitts, die andere der zwei seitlichen Kontaktflächen des Koppelarms an der anderen der zwei seitlichen Führungsflächen des Führungsabschnitts, die Grundkontaktfläche des Koppelarms an der Grundführungsfläche des Führungsabschnitts und/oder die Deckkontaktfläche des Koppelarms an der Deckführungsfläche des Führungsabschnitts geführt. Auf vorteilhafte Weise kann dadurch ebenfalls eine möglichst allseitige Führung des Koppelarms erreicht werden.

Nach einem weiteren Aspekt kann die Reflektoreinrichtung eine Temperiereinrichtung (z. B. eine Heiz- und/oder Kühleinrichtung) aufweisen. Bevorzugt dient die Temperiereinrichtung zur Temperierung der Reflexionsfläche und/oder des Spiegels der Reflektoreinrichtung. Grundsätzlich kann die Temperiereinrichtung bspw. eine thermoelektrische Temperiereinrichtung (z. B. aufweisend mindestens ein Peltier-Element) sein. Bevorzugt weist die Temperiereinrichtung jedoch einen Zulaufanschluss für eine Zulaufleitung, einen Ablaufanschluss für eine (z. B. mäanderförmige) Ablaufleitung und einen (z. B. in einem mit der Reflexionsfläche verbundenen Temperierblock angeordneten) von einem Temperierfluid durchströmbaren Kühlkanal, der den Zulaufanschluss und den Ablaufanschluss fluidisch miteinander verbindet, auf. Auf vorteilhafte Weise kann dadurch temperaturinduzierten Verformungen und/oder Schäden an der Reflektoreinrichtung entgegengewirkt werden.

Gemäß einem weiteren Aspekt kann die Reflektoreinrichtung eine Reflexionsfläche (z. B. eine Reflexionsschicht) zum Umlenken des Licht- und/oder Mikrowellenstrahls aufweisen. Beispielsweise kann die Reflektoreinrichtung einen (z. B. metallischen und/oder dielektischen) Spiegel mit der Reflexionsfläche aufweisen. Zudem oder alternativ kann der Spiegel aus (z. B. Quarz-)Glas gefertigt sein. Bevorzugt ist die Reflexionsfläche dabei eben und/oder der Spiegel ein Planspiegel. Es ist jedoch auch möglich, dass die Reflexionsfläche gekrümmt und/oder der Spiegel ein Hohlspiegel (z. B. ein sphärischer Hohlspiegel oder ein Parabolspiegel) ist. Bevorzugt ist die Reflexionsfläche (z. B. im Fall einer ebenen Reflexionsfläche) senkrecht zu einer (bzw. der) Winkelhalbierenden zwischen dem ersten und zweiten Koppelschenkel und/oder senkrecht zu einer (bzw. der) Winkelhalbierenden zwischen dem ersten und zweiten Befestigungsschenkel orientiert. Zudem oder alternativ kann (z. B. im Fall einer gekrümmten Reflexionsfläche) auch eine Hauptachse der Reflexionsfläche entlang oder parallel zu der (bzw. einer) Winkelhalbierenden zwischen dem ersten und zweiten Koppelschenkel und/oder entlang oder parallel zu der (bzw. einer) Winkelhalbierenden zwischen dem ersten und zweiten Befestigungsschenkel orientiert sein. Auf vorteilhafte Weise kann dadurch eine zuverlässige Umlenkung des Licht- und/oder Mikrowellenstrahls sichergestellt werden.

Nach einem weiteren Aspekt kann die Reflektoreinrichtung einen Reflexionsflächenträger (z. B. aus Plastik oder Metall) aufweisen. Der Reflexionsflächenträger kann die Reflexionsfläche, den Spiegel und/oder die Temperiereinrichtung tragen. Zudem oder alternativ können/kann die Reflexionsfläche, der Spiegel und/oder die Temperiereinrichtung an dem Reflexionsflächenträger (z. B. verstellbar) angebracht sein. Beispielsweise können der Spiegel mit der Reflexionsfläche und die Temperiereinrichtung fest miteinander verbunden (z. B. verklemmt) sein, wobei die Temperiereinrichtung samt Spiegel über justierbare Zug- und/oder Druckschrauben mit dem Reflexionsflächenträger verbunden sein kann. Auf vorteilhafte Weise kann dadurch eine sichere Halterung der Reflexionsfläche gewährleistet werden, die bevorzugt außerdem eine Feinjustage der Reflexionsfläche ermöglicht.

Gemäß einem weiteren Aspekt kann die Reflektoreinrichtung eine Verstelleinrichtung (z. B. eine Feinjustageeinrichtung) aufweisen, über die die Reflexionsfläche mit dem Reflexionsflächenträger verbunden sein kann und/oder mittels derer eine Position und/oder Orientierung der Reflexionsfläche relativ zu dem Reflexionsflächenträger einstellbar sein kann. Bevorzugt weist die Verstelleinrichtung mehrere Zug- und/oder Druckschrauben (z. B. Feinjustierschrauben und/oder Klemmschrauben mit zugehörigen Kontermuttern) und/oder einen abnehmbaren (z. B. kuppelförmigen) Deckel. Auf vorteilhafte Weise kann dadurch eine zuverlässige und genaue Nachjustierbarkeit der Reflexionsfläche relativ zum Reflexionsflächenträger ermöglicht werden.

Nach einem weiteren Aspekt kann (z. B. ausschließlich) der Reflexionsflächenträger den Führungsabschnitt aufweisen. Beispielsweise kann der Führungsabschnitt durch einen entsprechend geformten Abschnitt des Reflexionsflächenträgers ausgebildet sein. In diesen kann dabei bspw. zusätzlich eine Kugelumlaufhülse und/oder ein Linearkugellager eingesetzt sein.

Zudem oder alternativ kann der Führungsabschnitt als Nut (z. B. Rechtecknut), als Durchgangsloch (z. B. mit einem Querschnitt in Form eines Rechtecks mit zwei geraden Längskanten und zwei nach außen gewölbten Querkanten) oder als Sackloch (z. B. mit einem Querschnitt in Form eines Rechtecks mit zwei geraden Längskanten und zwei nach außen gewölbten Querkanten) im Reflexionsflächenträger ausgebildet sein. Auf vorteilhafte Weise kann dadurch eine möglichst einfach zu fertigende mehrseitige Führung für den Koppelarm bereitgestellt werden.

Zudem oder alternativ kann der Reflexionsflächenträger (z. B. mittels des oder eines Hauptdrehgelenks) an dem ersten Befestigungsschenkel und/oder an dem zweiten Befestigungsschenkel angelenkt sein. Beispielsweise können der Reflexionsflächenträger, der erste Befestigungsschenkel und der zweite Befestigungsschenkel (z. B. mittels des oder eines Hauptdrehgelenks) gelenkig miteinander verbunden sein, vorzugsweise derart, dass die vorgenannten Komponenten relativ zueinander verschwenkbar sein. Bevorzugt ist der Reflexionsflächenträger dabei mittels eines Wälzlagers (z.B. Kugel- und/oder Rollenlagers) mit dem ersten und/oder zweiten Befestigungsschenkel (z. B. gelenkig) verbunden. Auf vorteilhafte Weise kann dadurch eine möglichst kompakte Lagerung des Reflexionsflächenträgers ermöglicht werden.

Nach einem weiteren Aspekt kann der erste Befestigungsschenkel mehrere (z. B. rasterförmig angeordnete) erste Durchgangslöcher (z. B. Durchgangsbohrungen, insbesondere Passbohrungen) zur Aufnahme von ersten Befestigungselementen (z. B. Schraubelementen, insbesondere Passbolzen) aufweisen. Beispielsweise kann der erste Befestigungsschenkel und/oder die Vorrichtung mittels der ersten Befestigungselemente an dem ersten Strahlführungsteil befestigt oder befestigbar sein. Auf vorteilhafte Weise kann dadurch eine sichere Anbringung der Vorrichtung an dem ersten Strahlführungsteil ermöglicht werden.

Zudem oder alternativ kann auch der zweite Befestigungsschenkel mehrere (z. B. rasterförmig angeordnete) zweite Durchgangslöcher (z. B. Durchgangsbohrungen) zur Aufnahme von zweiten Befestigungselementen (z. B. Schraubelementen) aufweisen. Beispielsweise kann der zweite Befestigungsschenkel und/oder die Vorrichtung mittels der zweiten Befestigungselemente an dem zweiten Strahlführungsteil befestigt oder befestigbar sein. Auf vorteilhafte Weise wird dadurch eine sichere Anbringung der Vorrichtung an dem zweiten Strahlführungsteil ermöglicht.

Gemäß einem weiteren Aspekt kann ein Scheitelwinkel zwischen dem ersten Befestigungsschenkel und dem zweiten Befestigungsschenkel bspw. zwischen 50° und 130° betragen. Als Scheitelwinkel kann hierbei bspw. der von dem ersten Befestigungsschenkel (z. B. dessen Längsachse) und dem zweiten Befestigungsschenkel (z. B. dessen Längsachse) am Hauptdrehgelenk (als Scheitel) aufgespannte Winkel verstanden werden. Bevorzugt weist die Vorrichtung somit einen minimalen Scheitelwinkel von 50° auf, unterhalb dessen die beiden Befestigungsschenkel vorzugsweise nicht weiter aneinander angenähert werden können. Zudem oder alternativ kann die Vorrichtung einen maximalen Scheitelwinkel von 130° aufweisen, oberhalb dessen die beiden Befestigungsschenkel vorzugsweise nicht weiter voneinander entfernt werden können. Auf vorteilhafte Weise kann dadurch für den Großteil der Anwendungsfälle eine ausreichende Beweglichkeit der Vorrichtung gewährleistet werden.

Zudem oder alternativ können der erste Befestigungsschenkel und der zweite Befestigungsschenkel in einem (z. B. vorbestimmen) Scheitelwinkelintervall, bspw. zwischen 50° und 130°, (z. B. kontinuierlich) relativ zueinander (z. B. um den oder einen Schwenkwinkel) verschwenkbar sein. Lediglich beispielhaft können der erste und zweite Befestigungsschenkel ausgehend von dem minimalen Scheitelwinkel von 50° maximal um einen Schwenkwinkel von 80° relativ zueinander verschwenkbar sein, sodass der erste und zweite Befestigungsschenkel dann den maximalen Scheitelwinkel von 130° einnehmen. Auf vorteilhafte Weise kann dadurch ein bedarfsgerechtes Einstellen des Scheitelwinkels ermöglicht werden.

Nach einem weiteren Aspekt kann die Vorrichtung einen (z. B. länglichen) weiteren ersten Befestigungsschenkel zur Befestigung an dem ersten Strahlführungsteil (z. B. dem ersten Strahlführungsrohr) aufweisen. Beispielsweise kann die Vorrichtung damit sowohl mittels des ersten Befestigungsschenkels als auch mittels des weiteren ersten Befestigungsschenkels an dem ersten Strahlführungsteil befestigbar sein.

Weiterhin kann die Vorrichtung auch einen (z. B. länglichen) weiteren zweiten Befestigungsschenkel zur Befestigung an dem zweiten Strahlführungsteil (z. B. dem zweiten Strahlführungsrohr) aufweisen. Beispielsweise kann die Vorrichtung damit sowohl mittels des zweiten Befestigungsschenkels als auch mittels des weiteren zweiten Befestigungsschenkels an dem zweiten Strahlführungsteil befestigbar sein.

Der weitere erste Befestigungsschenkel und der weitere zweite Befestigungsschenkel können (z. B. mittels eines weiteren Hauptdrehgelenks) gelenkig miteinander verbunden sein, vorzugsweise derart, dass der weitere erste Befestigungsschenkel und der weitere zweite Befestigungsschenkel relativ zueinander verschwenkbar sind. Bevorzugt sind eine (z. B. Schwenk-)Achse des Hauptdrehgelenks und eine (z. B. Schwenk-)Achse des weiteren Hauptdrehgelenks dabei kollinear und/oder koaxial zueinander angeordnet. Beispielsweise kann das weitere Hauptdrehgelenk (z. B. planparallel versetzt) direkt oberhalb des Hauptdrehgelenks angeordnet sein. Auf vorteilhafte Weise kann dadurch eine möglichst stabile Verbindung zwischen der Vorrichtung und dem ersten und zweiten Strahlführungsteil sichergestellt werden.

Gemäß einem weiteren Aspekt können der weitere erste Befestigungsschenkel und der erste Befestigungsschenkel einander gegenüberliegend angeordnet sein. Beispielsweise können eine Unterseite des weiteren ersten Befestigungsschenkels und eine Oberseite des ersten Befestigungsschenkels einander zugewandt sein.

Zudem oder alternativ können der weitere erste Befestigungsschenkel und der erste Befestigungsschenkel (z. B. über die Reflektoreinrichtung und/oder die Koppeleinrichtung) konstant voneinander beabstandet sein. Beispielsweise können die (oder eine) Unterseite des weiteren ersten Befestigungsschenkels und die (oder eine) Oberseite des ersten Befestigungsschenkels parallel zueinander orientiert sein.

Zudem oder alternativ können der weitere erste Befestigungsschenkel und der erste Befestigungsschenkel (z. B. über die Koppeleinrichtung) miteinander bewegungsgekoppelt sein, vorzugsweise derart, dass bei einem Verschwenken des ersten Befestigungsschenkels relativ zum zweiten Befestigungsschenkel (z. B. um den Schwenkwinkel), der weitere erste Befestigungsschenkel (z. B. um den gleichen Schwenkwinkel) relativ zum zweiten Befestigungsschenkel (z. B. mit-)verschwenkt wird.

Nach einem weiteren Aspekt können der weitere zweite Befestigungsschenkel und der zweite Befestigungsschenkel (z. B. über die Reflektoreinrichtung und/oder die Koppeleinrichtung) einander gegenüberliegend angeordnet sein. Beispielsweise können eine Unterseite des weiteren zweiten Befestigungsschenkels und eine Oberseite des zweiten Befestigungsschenkels einander zugewandt sein.

Zudem oder alternativ können der weitere zweite Befestigungsschenkel und der zweite Befestigungsschenkel konstant voneinander beabstandet sein. Beispielsweise können die (oder eine) Unterseite des weiteren zweiten Befestigungsschenkels und die (oder eine) Oberseite des zweiten Befestigungsschenkels parallel zueinander orientiert sein.

Zudem oder alternativ können der weitere zweite Befestigungsschenkel und der zweite Befestigungsschenkel (z. B. über die Koppeleinrichtung) miteinander bewegungsgekoppelt sein, vorzugsweise derart, dass bei einem Verschwenken des zweiten Befestigungsschenkels relativ zum ersten Befestigungsschenkel (z. B. um den Schwenkwinkel), der weitere zweite Befestigungsschenkel (z. B. um den gleichen Schwenkwinkel) relativ zum ersten Befestigungsschenkel (z. B. mit-)verschwenkt wird.

Gemäß einem weiteren Aspekt kann die Koppeleinrichtung einen (z. B. gebogenen und/oder abgewinkelten) weiteren ersten Koppelschenkel aufweisen. Der weitere erste Koppelschenkel kann mit dem weiteren ersten Befestigungsschenkel (z. B. mittels eines weiteren ersten Wälzlagers, insbesondere Rollenlagers) gelenkig (z. B. schwenkbar) verbunden sein. Beispielsweise können der weitere erste Koppelschenkel und der weitere erste Befestigungsschenkel über ein, vorzugsweise von dem weiteren Hauptdrehgelenk beabstandetes, weiteres erstes Drehgelenk (z. B. aufweisend das weitere erste Wälzlager) gelenkig miteinander verbunden sein. Bevorzugt sind dabei eine (z. B. Schwenk-)Achse des weiteren ersten Drehgelenks und eine (z. B. Schwenk-)Achse des ersten Drehgelenks kollinear und/oder koaxial zueinander angeordnet. Beispielsweise kann das weitere erste Drehgelenk (z. B. planparallel versetzt) direkt oberhalb des ersten Drehgelenks angeordnet sein.

Weiterhin kann die Koppeleinrichtung einen (z. B. gebogenen und/oder abgewinkelten) weiteren zweiten Koppelschenkel aufweisen. Der weitere zweite Koppelschenkel kann mit dem weiteren zweiten Befestigungsschenkel (z. B. mittels eines weiteren zweiten Wälzlagers, insbesondere Rollenlagers) gelenkig (z. B. schwenkbar) verbunden sein. Beispielsweise können der weitere zweite Koppelschenkel und der weitere zweite Befestigungsschenkel über ein, vorzugsweise von dem weiteren Hauptdrehgelenk beabstandetes, weiteres zweites Drehgelenk (z. B. aufweisend das weitere zweite Wälzlager) gelenkig miteinander verbunden sein. Bevorzugt sind dabei eine (z. B. Schwenk-)Achse des weiteren zweiten Drehgelenks und eine (z. B. Schwenk-)Achse des zweiten Drehgelenks kollinear und/oder koaxial zueinander angeordnet. Beispielsweise kann das weitere zweite Drehgelenk (z. B. planparallel versetzt) direkt oberhalb des zweiten Drehgelenks angeordnet sein.

Der weitere erste Koppelschenkel und der weitere zweite Koppelschenkel können mittels des Gelenkbolzens gelenkig verbunden sein. Bevorzugt verbindet der Gelenkbolzen somit sowohl den ersten und zweiten Koppelschenkel gelenkig miteinander, als auch den weiteren ersten Koppelschenkel und den weiteren zweiten Koppelschenkel gelenkig miteinander. Beispielsweise können der weitere erste Koppelschenkel und der weitere zweite Koppelschenkel jeweils ein Durchgangsloch aufweisen, welche fluchtend zueinander angeordnet sind und in denen (z. B. mittels einer Gleitlagerung) der Gelenkbolzen aufgenommen ist. Auf vorteilhafte Weise kann durch die mehrfache Kopplung ein möglichst stabiles und zuverlässiges Nachführen der Reflektoreinrichtung gewährleistet werden.

Nach einem weiteren Aspekt können der weitere erste Koppelschenkel und der erste Koppelschenkel einander gegenüberliegend angeordnet sein. Beispielsweise können eine Unterseite des weiteren ersten Koppelschenkels und eine Oberseite des ersten Koppelschenkels einander zugewandt sein.

Zudem oder alternativ können der weitere erste Koppelschenkel und der erste Koppelschenkel konstant (z. B. über den Gelenkbolzen) voneinander beabstandet sein. Beispielsweise können die (oder eine) Unterseite des weiteren ersten Koppelschenkels und die (oder eine) Oberseite des ersten Koppelschenkels parallel zueinander orientiert sein.

Zudem oder alternativ können der weitere erste Koppelschenkel und der erste Koppelschenkel (z. B. durch ihre gemeinsame Anbringung am Gelenkbolzen) miteinander bewegungsgekoppelt sein.

Gemäß einem weiteren Aspekt können der weitere zweite Koppelschenkel und der zweite Koppelschenkel einander gegenüberliegend angeordnet sein. Beispielsweise können eine Unterseite des weiteren zweiten Koppelschenkels und eine Oberseite des zweiten Koppelschenkels einander zugewandt sein.

Zudem oder alternativ können der weitere zweite Koppelschenkel und der zweite Koppelschenkel (z. B. über den Gelenkbolzen) konstant voneinander beabstandet sein. Beispielsweise können die (oder eine) Unterseite des weiteren zweiten Koppelschenkels und die (oder eine) Oberseite des zweiten Koppelschenkels parallel zueinander orientiert sein.

Zudem oder alternativ können der weitere zweite Koppelschenkel und der zweite Koppelschenkel (z. B. durch ihre gemeinsame Anbringung am Gelenkbolzen) miteinander bewegungsgekoppelt sein.

Nach einem weiteren Aspekt kann die Koppeleinrichtung ferner einen (z. B. länglichen und/oder einseitig angelenkten) weiteren Koppelarm aufweisen. Bevorzugt dient der weitere Koppelarm (z. B. ebenfalls) zum Verschwenken der Reflektoreinrichtung. Hierzu kann der weitere Koppelarm in einem weiteren Führungsabschnitt (z. B. in einem Führungsloch) der Reflektoreinrichtung (z. B. in deren Reflexionsflächenträger) entlang der bzw. einer Führungsrichtung verschiebbar geführt sein. Bevorzugt weist auch der weiteren Koppelarm eine (weitere) Haupterstreckungsrichtung (z. B. Hauptlängsachse) auf, die entlang der Führungsrichtung orientiert ist. Weiterhin kann zwischen dem weiteren Koppelarm und dem weiteren Führungsabschnitt bspw. (z. B. zumindest abschnittsweise) ein Flächenkontakt bestehen und/oder ein Wälzlager angeordnet sein. Grundsätzlich kann der weitere Koppelarm unterschiedlich zum Koppelarm ausgebildet sein. Bevorzugt handelt es sich bei dem weiteren Koppelarm und dem Koppelarm jedoch um Gleichteile. Wie der Koppelarm kann auch der weitere Koppelarm an dem Gelenkbolzen (z. B. über ein Koppelarm-Drehlager) angelenkt sein, bspw. direkt oberhalb des Koppelarms. Lediglich beispielhaft kann der weitere Koppelarm dabei ein, vorzugsweise fluchtend zu den Durchgangslöchern des ersten und zweiten weiteren Koppelschenkels angeordnetes, Durchgangsloch aufweisen, in dem der Gelenkbolzen (z. B. mittels einer Gleitlagerung) aufgenommen ist. Auf vorteilhafte Weise kann dadurch die Stabilität der Vorrichtung bzw. die Zuverlässigkeit der Führung der Reflektoreinrichtung weiter erhöht werden.

Ein weiterer unabhängiger Aspekt der vorliegenden Offenbarung betrifft ein System zur Strahlführung eines Lichtstrahls (z. B. eines Laserstrahls) und/oder eines Mikrowellenstrahls (z. B. eines Maserstrahls).

Das System weist ein (z. B. länglichen und/oder röhrenförmiges) erstes Strahlführungsteil (z. B. ein erstes Strahlführungsrohr) auf. Bevorzugt dient das erste Strahlführungsteil zur Führung des Licht- und/oder Mikrowellenstrahls (z. B. als Freistrahl) und/oder zur Abschirmung eines (z. B. inneren) Strahlführungsbereichs. Das erste Strahlführungsteil kann ferner zumindest einen Schlitz zum Einsetzen einer Linse, eines Filters und/oder eines Polarisators aufweisen, wobei vorzugsweise der zumindest eine Schlitz des ersten Strahlführungsteils bei Nichtbenutzung blindgedeckelt sein kann.

Ferner weist das System ein (z. B. länglichen und/oder röhrenförmiges) zweites Strahlführungsteil (z. B. ein zweites Strahlführungsrohr) auf. Bevorzugt dient auch das zweite Strahlführungsteil zur Führung des Licht- und/oder Mikrowellenstrahls (z. B. als Freistrahl) und/oder zur Abschirmung eines (z. B. inneren) Strahlführungsbereichs. Auch das zweite Strahlführungsteil kann ferner zumindest einen Schlitz zum Einsetzen einer Linse, eines Filters und/oder eines Polarisators aufweisen, wobei vorzugsweise auch der zumindest eine Schlitz des zweiten Strahlführungsteils bei Nichtbenutzung blindgedeckelt sein kann.

Weiterhin weist das System (z. B. ausschließlich) eine Vorrichtung, wie hierin beschrieben auf. Folglich sollen die vorstehend im Zusammenhang mit der Vorrichtung beschriebenen Merkmale auch im Zusammenhang mit dem System offenbart und beanspruchbar sein. Entsprechendes soll auch umgekehrt gelten. Hierbei ist vorgesehen, dass ein erster Befestigungsschenkel der Vorrichtung am ersten Strahlführungsteil befestigt (z. B. angeschraubt) ist und ein zweiter Befestigungsschenkel der Vorrichtung am zweiten Strahlführungsteil befestigt (z. B. angeschraubt) ist, vorzugsweise derart, dass das erste und zweite Strahlführungsteil mittels der Vorrichtung gelenkig miteinander verbunden sind. Bevorzugt fungiert die Vorrichtung somit als Gelenk zwischen dem ersten und zweiten Strahlführungsteil. Weiterhin bevorzugt ist die Reflektoreinrichtung dabei derart angeordnet und/oder geführt, dass bei einem Verschwenken des ersten und zweiten Strahlführungsteils relativ zueinander um einen Schwenkwinkel, der Licht- und/oder Mikrowellenstrahl (z. B. unabhängig vom Schwenkwinkel) immer vom ersten zum zweiten Strahlführungsteils oder ungekehrt geführt und/oder umgelenkt wird. Auf vorteilhafte Weise kann dadurch eine sichere Strahlführung auch bei einer Änderung der relativen Position zwischen Quelle und Ziel gewährleistet werden.

Gemäß einem Aspekt kann das erste und/oder zweite Strahlführungsteil (z. B. jeweils) zumindest einen (z. B. umfangsseitig geschlossenen) Rohrabschnitt aufweisen. Beispielsweise kann das erste und/oder zweite Strahlführungsteil zumindest abschnittsweise als Strahlführungsrohr ausgebildet sein.

Zudem oder alternativ kann das erste und/oder zweite Strahlführungsteil (z. B. jeweils) teleskopartig längenverstellbar sein.

Zudem oder alternativ kann das erste und/oder zweite Strahlführungsteil (z. B. jeweils) einen Außenrohrabschnitt, einen Innenrohrabschnitt und mindestens ein (z. B. ringförmiges) Wälzlager (z. B. mit mehreren Wälzkörpern) aufweisen. Bevorzugt ist dabei der Innenrohrabschnitt im Außenrohrabschnitt längsverschieblich eingesetzt und/oder das mindestens eine Wälzlager zwischen dem Innenrohrabschnitt und dem Außenrohrabschnitt angeordnet ist. Beispielsweise kann der Innenrohrabschnitt über das mindestens eine Wälzlager mit dem Außenrohrabschnitt verbunden sein, vorzugsweise derart, dass bei einem Längsverschieben des Innenrohrabschnitts relativ zum Außenrohrabschnitt die Wälzkörper an einer Lauffläche des Außenrohrabschnitts, des Innenrohrabschnitts und/oder des mindestens einen Wälzlagers abrollen.

In einer (z. B. ersten) Ausführungsform kann das erste Strahlführungsteil einen, vorzugsweise (z. B. mittels eines Nadelkranzes) drehbaren, (z. B. ersten) Flansch zur Befestigung an einem Fensterflansch einer Vakuumanlage aufweisen und/oder das zweite Strahlführungsteil einen, vorzugsweise (z. B. mittels eines Nadelkranzes) drehbaren, (z. B. zweiten) Flansch zur Befestigung an einem Fensterflansch einer Vakuumanlage aufweisen. Bevorzugt weist das System keine weiteren Gelenke als die Vorrichtung zur Umlenkung des Licht- und/oder Mikrowellenstrahls auf. Insgesamt kann dadurch eine einfache und kostengünstige Lösung zur beweglichen Strahlführung bereitgestellt werden, welche sich insbesondere für ein abgewinkeltes Führen des Licht- und/oder Mikrowellenstrahls innerhalb einer Ebene eignet.

Nach einem weiteren Aspekt kann das System ferner (z. B. ausschließlich) eine weitere Vorrichtung, wie hierin beschrieben, aufweisen. Grundsätzlich können die Vorrichtung und die weitere Vorrichtung dabei unterschiedlich ausgebildet sein. Bevorzugt handelt es sich bei der Vorrichtung und der weiteren Vorrichtung allerdings um Gleichteile.

Weiterhin kann das System ein (z. B. länglichen und/oder röhrenförmiges) drittes Strahlführungsteil (z. B. ein drittes Strahlführungsrohr) aufweisen. Bevorzugt dient das dritte Strahlführungsteil zur Führung des Licht- und/oder Mikrowellenstrahls (z. B. als Freistrahl) und/oder zur Abschirmung eines (z. B. inneren) Strahlführungsbereichs. Ein erster Befestigungsschenkel der weiteren Vorrichtung kann dabei am zweiten Strahlführungsteil befestigt (z. B. angeschraubt) sein und ein zweiter Befestigungsschenkel der weiteren Vorrichtung am dritten Strahlführungsteil befestigt (z. B. angeschraubt) sein, vorzugsweise so, dass das zweite und dritte Strahlführungsteil mittels der weiteren Vorrichtung gelenkig miteinander verbunden sind. Bevorzugt fungiert die weitere Vorrichtung dabei als Gelenk zwischen dem zweiten und dritten Strahlführungsteil. Weiterhin bevorzugt ist die Reflektoreinrichtung der weiteren Vorrichtung derart angeordnet und/oder geführt, dass bei einem Verschwenken des zweiten und dritten Strahlführungsteils relativ zueinander um einen Schwenkwinkel, der Licht- und/oder Mikrowellenstrahl (z. B. unabhängig vom Schwenkwinkel) immer vom zweiten zum dritten Strahlführungsteils oder ungekehrt geführt und/oder umgelenkt wird. Auf vorteilhafte Weise kann dadurch eine größere Flexibilität bei der Strahlführung erreicht werden.

In einer (z. B. zweiten) Ausführungsform kann das erste Strahlführungsteil einen, vorzugsweise (z. B. mittels eines Nadelkranzes) drehbaren, (z. B. ersten) Flansch zur Befestigung an einem Fensterflansch einer Vakuumanlage aufweisen und/oder das dritte Strahlführungsteil einen, vorzugsweise (z. B. mittels eines Nadelkranzes) drehbaren, (z. B. dritten) Flansch zur Befestigung an einem Fensterflansch einer Vakuumanlage aufweisen. Bevorzugt ist (z. B. ausschließlich) das zweite Strahlführungsteil teleskopartig längenverstellbar. Beispielsweise kann das zweite Strahlführungsteil dazu einen Außenrohrabschnitt, einen Innenrohrabschnitt und mindestens ein Wälzlager (z. B. einen Kugelkäfig) aufweisen. Der Innen- und Außenrohrabschnitt können dabei über das mindestens eine Wälzlager miteinander verbunden sein, derart, dass der Innenrohrabschnitt im Außenrohrabschnitt längsverschieblich und/oder rotierbar aufgenommen ist. Das erste und dritte Strahlführungsteil können hingegen vorzugsweise nicht teleskopartig längenverstellbar sein. Weiterhin bevorzugt weist das System keine weiteren Gelenke als die Vorrichtung zur Umlenkung des Licht- und/oder Mikrowellenstrahls und die weitere Vorrichtung zur Umlenkung des Licht- und/oder Mikrowellenstrahls auf.

Gemäß einem weiteren Aspekt kann das System ferner (z. B. ausschließlich) eine nochmals weitere Vorrichtung, wie hierin beschrieben, aufweisen. Grundsätzlich können die nochmals weitere Vorrichtung, die weitere Vorrichtung und die Vorrichtung unterschiedlich ausgebildet sein. Bevorzugt handelt es sich bei der nochmals weiteren Vorrichtung, der weiteren Vorrichtung und der Vorrichtung allerdings um Gleichteile.

Weiterhin kann das System ein (z. B. länglichen und/oder röhrenförmiges) viertes Strahlführungsteil (z. B. ein viertes Strahlführungsrohr) aufweisen. Bevorzugt dient das vierte Strahlführungsteil zur Führung des Licht- und/oder Mikrowellenstrahls (z. B. als Freistrahl) und/oder zur Abschirmung eines (z. B. inneren) Strahlführungsbereichs. Ein erster Befestigungsschenkel der nochmals weiteren Vorrichtung kann am dritten Strahlführungsteil befestigt (z. B. angeschraubt) sein und ein zweiter Befestigungsschenkel der nochmals weiteren Vorrichtung kann am vierten Strahlführungsteil befestigt (z. B. angeschraubt) sein, vorzugsweise so, dass das dritte und vierte Strahlführungsteil mittels der nochmals weiteren Vorrichtung gelenkig miteinander verbunden sind. Bevorzugt fungiert die nochmals weitere Vorrichtung dabei als Gelenk zwischen dem dritten und vierten Strahlführungsteil. Weiterhin bevorzugt ist die Reflektoreinrichtung der nochmals weiteren Vorrichtung derart angeordnet und/oder geführt, dass bei einem Verschwenken des dritten und vierten Strahlführungsteils relativ zueinander um einen Schwenkwinkel, der Licht- und/oder Mikrowellenstrahl (z. B. unabhängig vom Schwenkwinkel) immer vom dritten zum vierten Strahlführungsteils oder ungekehrt geführt und/oder umgelenkt wird. Auf vorteilhafte Weise kann dadurch eine nochmals größere Flexibilität bei der Strahlführung erreicht werden.

In einer (z. B. dritten) Ausführungsform kann das erste Strahlführungsteil einen, vorzugsweise (z. B. mittels eines Nadelkranzes) drehbaren, (z. B. ersten) Flansch zur Befestigung an einem Fensterflansch einer Vakuumanlage aufweisen und/oder das vierte Strahlführungsteil einen, vorzugsweise (z. B. mittels eines Nadelkranzes) drehbaren, (z. B. vierten) Flansch zur Befestigung an einem Fensterflansch einer Vakuumanlage aufweisen. Bevorzugt ist in dieser Ausführungsform keines der Strahlführungsteile, d. h. weder das erste, zweite, dritte und vierte Strahlführungsteil, teleskopartig längenverstellbar. Allerdings können das zweite und/oder dritte Strahlführungsteil vorzugsweise (z. B. jeweils) rotierbar sein. Beispielsweise kann das zweite und/oder dritte Strahlführungsteil (z. B. jeweils) einen Außenrohrabschnitt, einen Innenrohrabschnitt und mindestens ein Wälzlager (z. B. einen Kugelkäfig) aufweisen. Der (z. B. jeweilige) Innen- und Außenrohrabschnitt können dabei über das (z. B. jeweilige) mindestens eine Wälzlager miteinander verbunden sein, derart, dass der Innenrohrabschnitt im Außenrohrabschnitt rotierbar aufgenommen ist. Weiterhin bevorzugt weist das System keine weiteren Gelenke als die Vorrichtung zur Umlenkung des Licht- und/oder Mikrowellenstrahls, die weitere Vorrichtung zur Umlenkung des Licht- und/oder Mikrowellenstrahls und die nochmals weitere Vorrichtung zur Umlenkung des Licht- und/oder Mikrowellenstrahls auf.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
- Figuren 1 bis 9: verschiedene Ansichten bzw. Schnittdarstellungen einer Vorrichtung zur Umlenkung eines Licht- und/oder Mikrowellenstrahls gemäß einer Ausführungsform;
- Figuren 10 und 11: ein System zur Strahlführung eines Licht- und/oder Mikrowellenstrahls gemäß einer Ausführungsform; und
- Figur 12: ein System zur Strahlführung eines Licht- und/oder Mikrowellenstrahls gemäß einer weiteren Ausführungsform.

Gleiche oder funktional äquivalente Elemente sind in allen Figuren mit denselben Bezugszeichen beschrieben und zum Teil nicht gesondert beschrieben, sodass zu deren Erläuterung auch auf die Beschreibung der anderen Ausführungsformen bzw. Figuren verwiesen wird, um Wiederholungen zu vermeiden.

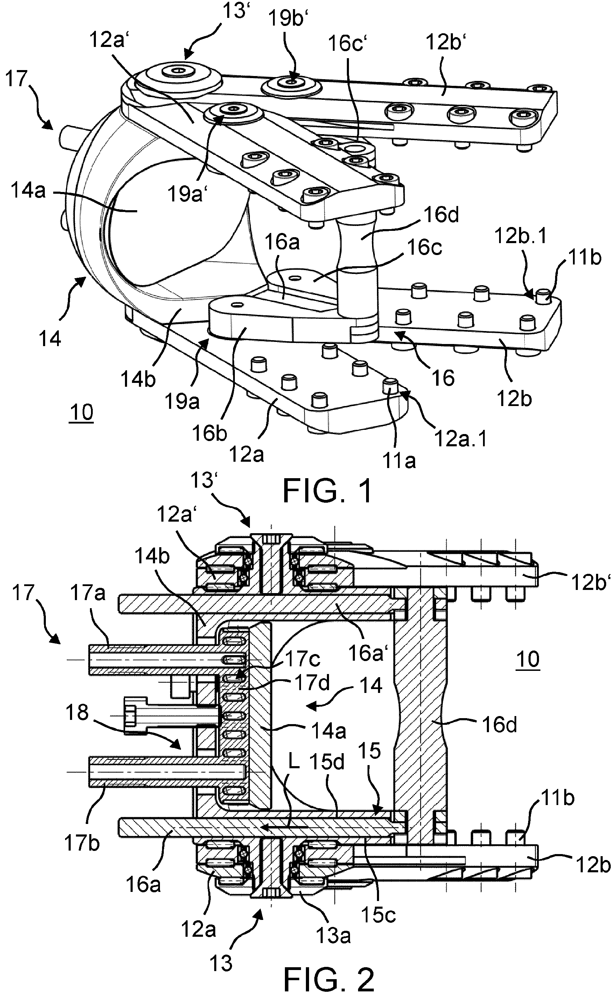

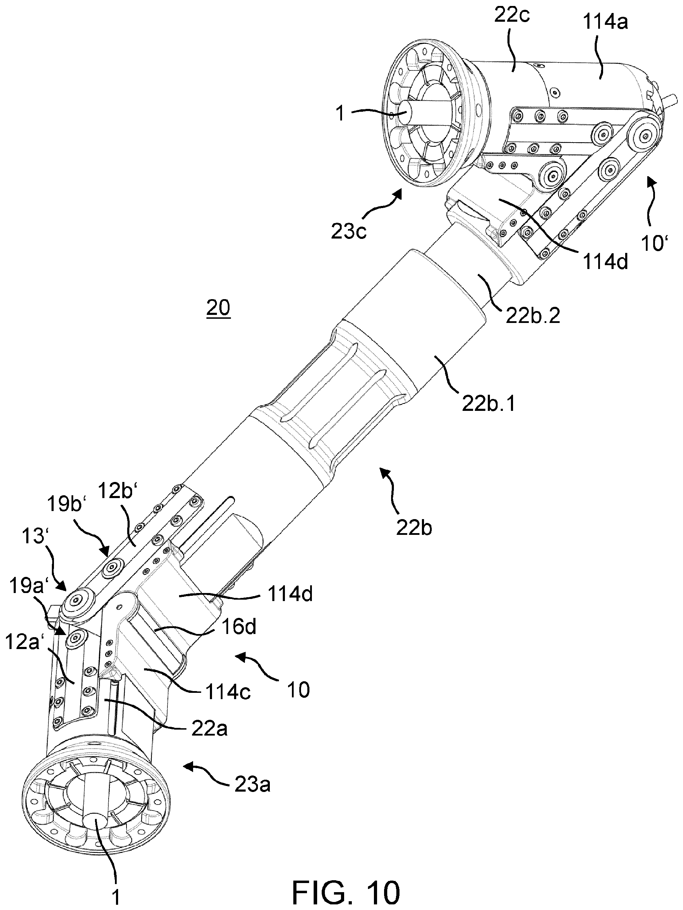

Die Figuren 1 bis 9 zeigen zumindest ausschnittsweise verschiedene Ansichten bzw. Schnittdarstellungen einer Vorrichtung 10 zur Umlenkung eines Licht- und/oder Mikrowellenstrahls 1 gemäß einer Ausführungsform. Die Vorrichtung 10 kann bspw. Teil der in den Figuren 10 bis 12 exemplarisch dargestellten beweglichen Systeme 20 zur Strahlführung sein. Bevorzugt fungiert die Vorrichtung 10 dabei als ein Gelenk des jeweiligen Systems 20, sodass die Strahlführung in dem jeweiligen System 20 bedarfsgerecht verändert werden kann, bspw. für den Fall, dass sich die relative Position zwischen Quelle und Ziel des Licht- und/oder Mikrowellenstrahls 1 ändert.

Die in den Figuren dargestellte Vorrichtung 10 weist einen (z. B. unteren) ersten Befestigungsschenkel 12a, einen (z. B. unteren) zweiten Befestigungsschenkel 12b, eine Reflektoreinrichtung 14 und eine Koppeleinrichtung 16 auf, vgl. z. B. insbesondere Figur 1.

Der erste Befestigungsschenkel 12a ist bevorzugt aus einem formfesten (z. B. Voll-)Material, bspw. aus Metall. Der erste Befestigungsschenkel 12a kann eine längliche und/oder flache Form aufweisen. Beispielsweise kann seine Längsausdehnung ein Vielfaches seiner Quer- und/oder Dickenausdehnung betragen. Der erste Befestigungsschenkel 12a kann eine plane Oberseite und/oder eine gewölbte Unterseite aufweisen, wobei bevorzugt die Ober- und Unterseite einander entgegengesetzt orientiert sind.

Bevorzugt dient der erste Befestigungsschenkel 12a zur Befestigung an einem ersten Strahlführungsteil 22a (z. B. an einem ersten Strahlführungsrohr), vgl. Figuren 10-12. Hierfür kann der erste Befestigungsschenkel 12a mehrere, vorliegend z. B. sechs, erste Durchgangslöcher 12a.1 zur Aufnahme von ersten Befestigungselementen 11a (z. B. Zylinderkopfschrauben) aufweisen. Mittels der ersten Befestigungselemente 11a kann der erste Befestigungsschenkel 12a bspw. an einem ersten Strahlführungsteil 22a anschraubbar oder angeschraubt sein, vgl. Figuren 10 bis 12.

Die ersten Durchgangslöcher 12a.1 können bspw. jeweils als Durchgangsbohrungen ausgebildet sein. Die ersten Durchgangslöcher 12a.1 können rasterförmig, z. B. in einem 2x3-Raster, angeordnet sein. Die ersten Durchgangslöcher 12a.1 können jeweils eine Senkung aufweisen, bevorzugt zur zumindest teilweisen Aufnahme eines jeweiligen Kopfes der ersten Befestigungselemente 11a.

Der zweite Befestigungsschenkel 12b kann im Wesentlichen wie der erste Befestigungsschenkel 12a ausgebildet sein. Beispielsweise können der erste und zweite Befestigungsschenkel 12a und 12b gleich lang, gleich breit und/oder gleich dick sein. Entsprechend kann der zweite Befestigungsschenkel 12b die vorstehend im Zusammenhang mit dem ersten Befestigungsschenkel 12a beschriebenen Merkmale aufweisen, wobei der Ausdruck "erste" durch "zweite" zu ersetzen ist. Bevorzugt dient der zweite Befestigungsschenkel 12b zur Befestigung an einem, vom ersten Strahlführungsteil 22a unterschiedlichen, zweiten Strahlführungsteil 22b (z. B. an einem zweiten Strahlführungsrohr), vgl. Figuren 10 bis 12.

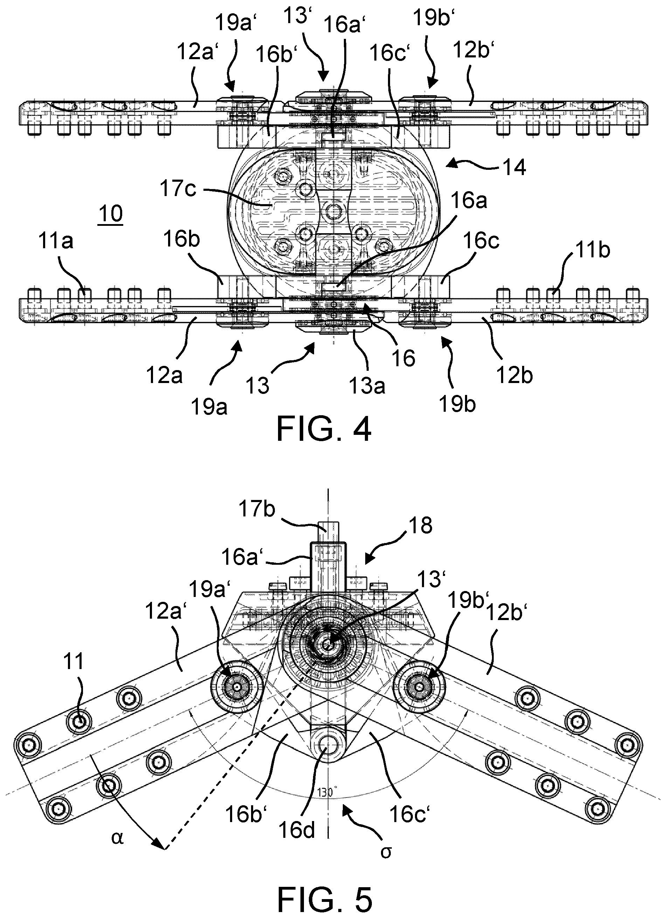

Wie ferner bspw. in den Figuren 1 und 5 ersichtlich ist, sind der erste Befestigungsschenkel 12a und der zweite Befestigungsschenkel 12b gelenkig miteinander verbunden. Beispielsweise können der erste und zweite Befestigungsschenkel 12a und 12b mittels eines Drehgelenks, welches zur besseren Unterscheidung auch als Hauptdrehgelenk 13 bezeichnet werden kann, gelenkig miteinander verbunden sein.

Das Hauptdrehgelenk 13 kann hierbei bspw. einen Hauptgelenkschaft aufweisen, der sich durch ein Durchgangsloch des ersten Befestigungsschenkels 12a und durch ein Durchgangsloch des zweiten Befestigungsschenkels 12b erstrecken kann. Entsprechend können der erste und zweite Befestigungsschenkel 12a, 12b um den Hauptgelenkschaft (z. B. um einen Schwenkwinkel α relativ zueinander) schwenkbar sein. Der Hauptgelenkschaft kann somit eine Hauptschwenkachse für den ersten und zweiten Befestigungsschenkel 12a, 12b bilden, um die vorzugsweise der erste und zweite Befestigungsschenkel 12a, 12b um einen Schwenkwinkel α relativ zueinander schwenkbar sind.

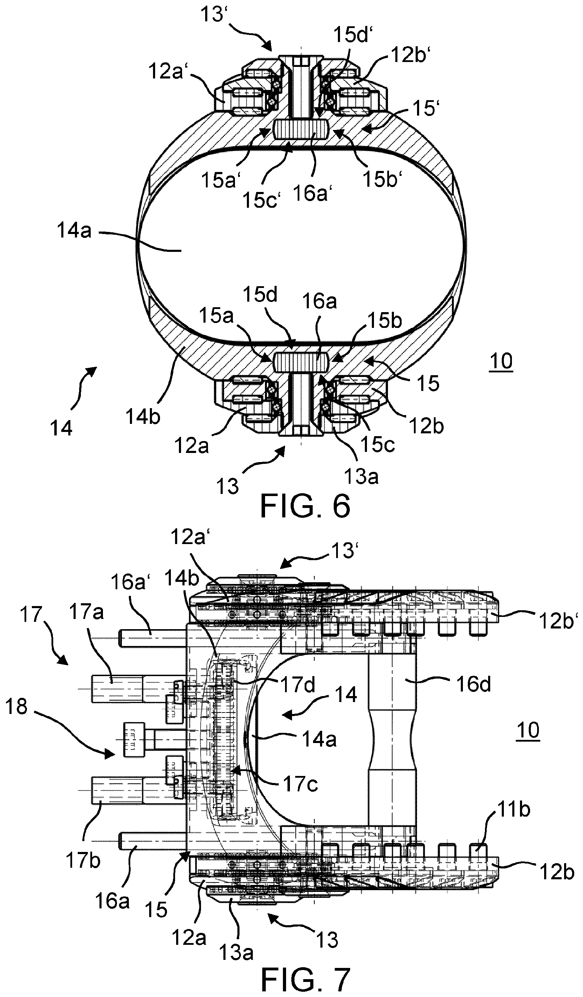

Der Hauptgelenkschaft kann dabei Teil der Reflektoreinrichtung 14 sein (vgl. z. B. Figuren 2 und 6). Beispielsweise kann der Hauptgelenkschaft integral-einstückig mit einem Reflexionsflächenträger 14b der Reflektoreinrichtung 14 verbunden, bspw. an den Reflexionsflächenträger 14b angeformt, sein. Der Hauptgelenkschaft kann von dem Reflexionsflächenträger 14b, z. B. nach unten, abragen und/oder abstehen.

Zur Reduzierung eines Reibungswiderstands kann dabei zwischen dem Hauptgelenkschaft und einer Innenfläche des Durchgangslochs des ersten Befestigungsschenkels 12a ein erstes Kugellager und/oder zwischen dem Hauptgelenkschaft und einer Innenfläche des Durchgangslochs des zweiten Befestigungsschenkels 12b ein zweites Kugellager angeordnet sein, vgl. bspw. Figuren 2 und 4.

Ferner kann das Hauptdrehgelenk 13 einen Hauptdrehgelenkdeckel 13a aufweisen, mittels dessen der erste und zweite Befestigungsschenkel 12a, 12b an der Reflektoreinrichtung 14 bzw. am Hauptgelenkschaft angebracht und/oder gehalten ist. Beispielsweise kann der Hauptdrehgelenkdeckel 13a eine größere laterale Ausdehnung als das Durchgangsloch des ersten und zweiten Befestigungsschenkels 12a, 12b aufweisen und/oder mittels eines Schraubelements an einer von der Reflektoreinrichtung 14 wegweisenden Stirnseite des Hauptgelenkschaft befestigt sein (vgl. z. B. Figuren 1, 2 und 6). Zur Reduzierung des Reibungswiderstands bei einem Verschwenken der ersten und zweiten Befestigungsschenkel 12a, 12b kann zwischen dem Hauptdrehgelenkdeckel 13a und dem zweiten Befestigungsschenkel 12b, zwischen dem ersten und zweiten Befestigungsschenkel 12a, 12b und/oder zwischen dem ersten Befestigungsschenkel 12a und der Reflektoreinrichtung 14 (jeweils) ein Axial-Rollenlager angeordnet sein. Entsprechend kann der Hauptdrehgelenkdeckel 13a in diesem Zusammenhang auch als Rollenlagerdeckel bezeichnet werden, vgl. z. B. Figuren 2 und 4 bis 6.

Die Reflektoreinrichtung 14 kann neben den vorstehend bereits erwähnten Reflexionsflächenträger 14b eine Reflexionsfläche 14a, eine Temperiereinrichtung 17 und/oder eine Verstelleinrichtung 18 aufweisen, vgl. z. B. Figuren 2 und 7.

Die Reflexionsfläche 14a dient bevorzugt zum Ab- bzw. Umlenken des Licht- und/oder Mikrowellenstrahls 1 aus seiner ursprünglichen Einfallsrichtung. Die Reflexionsfläche 14a kann bspw. Teil eines (z. B. eines metallischen und/oder dielektischen) Spiegels der Reflektoreinrichtung 14 sein. Mit anderen Worten kann die Reflektoreinrichtung 14 einen Spiegel mit der Reflexionsfläche aufweisen. Die Reflexionsfläche 14a kann ausgebildet sein, den einfallenden Licht- und/oder Mikrowellenstrahl 1 zu reflektieren bzw. umzulenken. Die Reflexionsfläche 14a kann dabei plan oder gekrümmt bzw. gewölbt sein.

Die Reflexionsfläche 14a und/oder der Spiegel kann, bspw. über zwei Klemmbleche, an einem (z. B. metallischen) Temperierblock 17d der Temperiereinrichtung 17 befestigt sein. Beispielsweise kann die Temperiereinrichtung 17 und/oder der Temperierblock 17d einen von einem Temperierfluid durchströmbaren (z. B. mäanderförmigen) Kühlkanal 17c aufweisen. Der Kühlkanal 17c kann bspw. innerhalb des Temperierblocks 17d ausgebildet sein und einen Zulaufanschluss 17a und einen Ablaufanschluss 17b der Temperiereinrichtung 17 fluidisch miteinander verbinden, vgl. Figuren 2und 4. Der Temperierblock 17d und die Reflexionsfläche 14a bzw. der Temperierblock 17d und der Spiegel können wärmeübertragend gekoppelt sein. Entsprechend kann über ein Durchströmen der Temperiereinrichtung 17 mit Temperierfluid einer konstanten Temperatur eine möglichst gleichbleibende Temperatur der Reflexionsfläche 14a und/oder des Spiegels gewährleistet werden.

Die Reflexionsfläche 14a, der Spiegel und/oder die Temperiereinrichtung 17 kann vom Reflexionsflächenträger 14b getragen und/oder am Reflexionsflächenträger 14b angebracht sein. Bevorzugt ist die Reflexionsfläche 14a, der Spiegel und/oder die Temperiereinrichtung 17 dabei über die Verstelleinrichtung 18 mit dem Reflexionsflächenträger 14b verbunden, vgl. z. B. Figur 7. Entsprechend kann eine Position und/oder Orientierung der Reflexionsfläche 14a, des Spiegels und/oder der Temperiereinrichtung 17 relativ zu dem Reflexionsflächenträger 14b mittels der Verstelleinrichtung 18 einstellbar sein. Hierzu kann die Verstelleinrichtung 18 bspw. mehrere Zug- und/oder Druckschrauben umfassen, die bspw. jeweils an einem Ende zumindest abschnittsweise in dem Reflexionsflächenträger 14b aufgenommen sein können und am jeweils entgegengesetzten Ende mit dem Temperierblock 17d verbunden sein können. Die Verstelleinrichtung 18 bzw. die mehreren Zug- und/oder Druckschrauben können (z. B. geschützt) hinter einem kuppelförmigen und/oder sphärischen Deckel der Reflektoreinrichtung 14 angeordnet sein, welcher ferner auch für Lichtdichtheit sorgen kann.

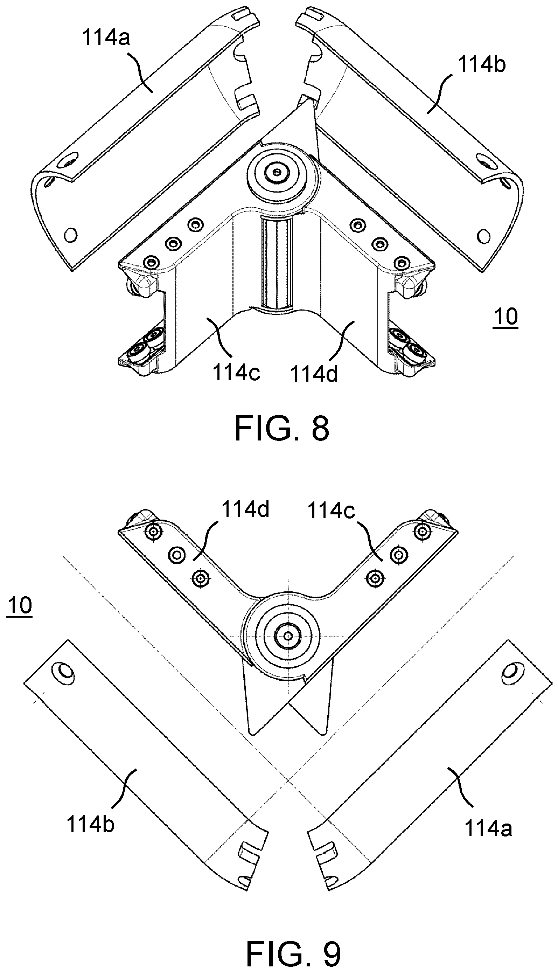

Zur Erhöhung der Lichtdichtheit und/oder der Personensicherheit können ferner bewegliche sektional-sphärische Schaltenteile 114a, 114b (z. B. außen) an der Reflektoreinrichtung 14, dem ersten Strahlführungsteil 22a und/oder zweiten Strahlführungsteil 22b angeordnet sein (vgl. Figuren 8 und 9). Bspw. kann ein erstes Schalenteil 114a der Schalenteile 114a, 114b an dem ersten Strahlführungsteil 22a angeschraubt sein und/oder ein zweites Schalenteil 114b der Schaltenteile 114a, 114b an dem zweiten Strahlführungsteil 22b angeschraubt sein. Bevorzugt weißt sowohl das erste Schalenteil 114a als auch das zweite Schalenteil 114b jeweils Aussparungen für den Zulauf- und Ablaufanschluss 17a, 17b auf. Zudem oder alternativ können auch im Bereich der Koppeleinrichtung 16 Verschalungsteile 114c, 114d zur Erhöhung der Lichtdichtheit und/oder der Personensicherheit angeordnet sein. Beispielsweise können die Verschalungsteile 114c, 114d ein erstes Verschalungsteil 114c umfassen, das an dem Gelenkbolzen 16d abgelenkt und in einer Nut des ersten Strahlführungsteils 22a längsverschieblich geführt sein kann. Weiterhin können die Verschalungsteile 114c, 114d ein zweites Verschalungsteil 114d umfassen, das an dem Gelenkbolzen 16d abgelenkt und in einer Nut des zweiten Strahlführungsteils 22b längsverschieblich geführt sein kann.

Der Reflexionsflächenträger 14b kann die Reflexionsfläche 14a mehrseitig umgeben. Beispielsweise kann der Reflexionsflächenträger 14b zumindest abschnittsweise unterhalb, oberhalb und/oder hinter der Reflexionsfläche 14a angeordnet sein. Der Reflexionsflächenträger 14b kann einteilig ausgebildet sein.

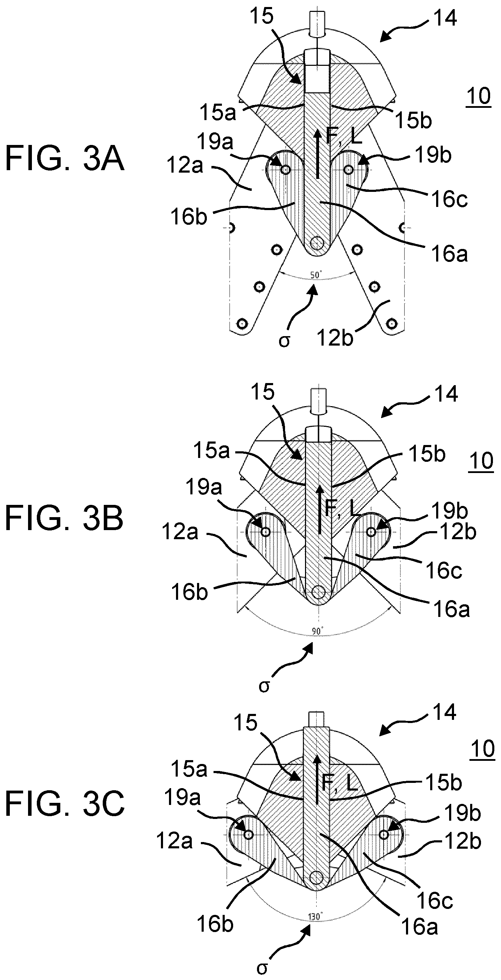

Der Reflektoreinrichtung 14, bspw. deren Reflexionsflächenträger 14b, weist ferner einen Führungsabschnitt 15 (z. B. einen Linearführungsabschnitt) zur Führung eines Koppelarms 16a der im Folgenden noch eingehender beschriebenen Koppeleinrichtung 16 auf. Bevorzugt ist der Koppelarm 16a hierbei Führungsabschnitt 15 entlang einer Führungsrichtung F verschiebbar geführt, vgl. z. B. Figuren 3A-3C. Hierzu kann der Führungsabschnitt 15 mehrere parallel zur Führungsrichtung F orientierte Führungsflächen 15a, 15b, 15c, 15d aufweisen, vgl. z. B. Figur 6. Beispielsweise können die mehreren Führungsflächen 15a, 15b, 15c, 15d zwei seitliche Führungsflächen 15a, 15b, eine Grundführungsfläche 15c und eine Deckführungsfläche 15d umfassen.

Wie bspw. in Figur 6 weiter erkennbar ist, sind die Grundführungsfläche 15c und die Deckführungsfläche 15d bevorzugt plan, parallel zueinander orientiert und/oder einander gegenüberliegend angeordnet. Die seitliche Führungsflächen 15a, 15b sind hingegen bevorzugt gewölbt und/ oder einander gegenüberliegend angeordnet. Die mehreren Führungsflächen 15a, 15b, 15c, 15d können zusammen einen Führungskanal bilden. Der Führungskanal (z. B. in Form eines Durchgangs- oder Sackloches) kann umfangsseitig geschlossen sein und/oder einen entlang der Führungsrichtung F einen im Wesentlichen konstanten Querschnitt, vorzugsweise in Form eines Rechtecks mit zwei geraden Längskanten und zwei nach außen gewölbten Querkanten, aufweisen. Grundsätzlich kann der Führungskanal allerdings auch entlang der Führungsrichtung F einen quadratischen oder runden Querschnitt aufweisen. Alternativ kann der Führungsabschnitt 15 auch als Nut ausgebildet sein und bspw. nur die zwei seitlichen Führungsflächen 15a, 15b und die Grundführungsfläche 15c aufweisen.

Über den im Führungsabschnitt 15 bzw. im Führungskanal geführten Koppelarm 16a kann die Reflektoreinrichtung 14 bewegbar, insbesondere verschwenkbar sein, was im Folgenden im Zusammenhang mit der Koppeleinrichtung 16 noch eingehender beschrieben wird.

Bevorzugt sind die Reflektoreinrichtung 14, der erste Befestigungsschenkel 12a und der zweite Befestigungsschenkel 12b über die Koppeleinrichtung 16 miteinander bewegungsgekoppelt verbunden. Die Koppeleinrichtung 16 kann hierzu neben dem Koppelarm 16a einen ersten Koppelschenkel 16b, einen zweiten Koppelschenkel 16c und/oder einen Gelenkbolzen 16d aufweisen (vgl. z. B. Figur 1).

Der erste Koppelschenkel 16b kann mit dem ersten Befestigungsschenkel 12a gelenkig verbunden sein. Beispielsweise können der erste Koppelschenkel 16b und der erste Befestigungsschenkel 12a mittels eines Drehgelenks, welches zur besseren Unterscheidung auch als erstes Drehgelenk 19a bezeichnet werden kann, gelenkig miteinander verbunden sein, vgl. z. B. Figuren 3A-3C. Das erste Drehgelenk 19a kann dabei an einem Ende des ersten Koppelschenkels 16b angeordnet sein, welches im Folgenden bspw. auch als erstes Koppelschenkelende des ersten Koppelschenkels 16b bezeichnet werden kann.

Das erste Drehgelenk 19a kann bspw. einen ersten Schraubbolzen aufweisen, der sich durch ein weiteres Durchgangsloch des ersten Befestigungsschenkels 12a erstreckt und der in ein Sackloch mit Innengewinde des ersten Koppelschenkels 16b eingeschraubt ist. Entsprechend kann der erste Befestigungsschenkels 12a um das erste Drehgelenk relativ zum ersten Koppelschenkel 16b verschwenkbar sein. Zwischen einem Kopf des ersten Schraubbolzens und dem ersten Befestigungsschenkel 12a kann dabei ein erster Drehgelenkdeckel angeordnet sein. Beispielsweise kann der erste Drehgelenkdeckel eine größere laterale Ausdehnung als das weitere Durchgangsloch des ersten Befestigungsschenkels 12a aufweisen. Zur Reduzierung eines Reibungswiderstands kann zwischen dem ersten Schraubbolzen und einer Innenfläche des weiteren Durchgangslochs des ersten Befestigungsschenkels 12a ein Kugellager angeordnet sein. Zudem oder alternativ kann zwischen dem ersten Befestigungsschenkel 12a und dem ersten Koppelschenkel 16b und/oder zwischen dem ersten Befestigungsschenkel 12a und dem ersten Drehgelenkdeckel (jeweils) ein Axial-Rollenlager angeordnet sein, vgl. Figuren 4 und 5.

Der zweite Koppelschenkel 16c kann dabei mit dem zweiten Befestigungsschenkel 12b gelenkig verbunden sein. Beispielsweise können der zweite Koppelschenkel 16c und der zweite Befestigungsschenkel 12b mittels eines Drehgelenks, welches zur besseren Unterscheidung auch als zweites Drehgelenk 19b bezeichnet werden kann, gelenkig miteinander verbunden sein, vgl. z. B. Figuren 3A-3C. Das zweite Drehgelenk 19b kann dabei an einem Ende des zweiten Koppelschenkels 16c angeordnet sein, welches im Folgenden bspw. auch als erstes Koppelschenkelende des zweiten Koppelschenkels 16c bezeichnet werden kann.

Auch das zweite Drehgelenk 19b kann bspw. einen zweiten Schraubbolzen aufweisen, der sich durch ein weiteres Durchgangsloch des zweiten Befestigungsschenkels 12b erstreckt und der in ein Sackloch mit Innengewinde des zweiten Koppelschenkels 16c eingeschraubt ist. Entsprechend kann der zweite Befestigungsschenkel 12b um das zweite Drehgelenk relativ zum zweiten Koppelschenkel 16c verschwenkbar sein. Zwischen einem Kopf des zweiten Schraubbolzens und dem zweiten Befestigungsschenkel 12b kann dabei ein zweiter Drehgelenkdeckel angeordnet sein. Beispielsweise kann der zweite Drehgelenkdeckel eine größere laterale Ausdehnung als das weitere Durchgangsloch des zweiten Befestigungsschenkels 12b aufweisen. Zur Reduzierung eines Reibungswiderstands kann zwischen dem zweiten Schraubbolzen und einer Innenfläche des weiteren Durchgangslochs des zweiten Befestigungsschenkels 12b wiederum ein Kugellager angeordnet sein. Zudem oder alternativ kann zwischen dem zweiten Befestigungsschenkel 12b und dem zweiten Koppelschenkel 16c und/oder zwischen dem zweiten Befestigungsschenkel 12b und dem zweiten Drehgelenkdeckel (jeweils) ein Axial-Rollenlager angeordnet sein, vgl. Figuren 4 und 5.

Ferner kann die Koppeleinrichtung 16 einen (z. B. stiftförmigen) Gelenkbolzen 16d aufweisen, mittels dessen der erste Koppelschenkel 16b und der zweite Koppelschenkel 16c gelenkig miteinander verbunden sind.

Beispielsweise kann der erste Koppelschenkel 16b an einem, dem ersten Koppelschenkelende des ersten Koppelschenkels 16b entgegengesetzten, Ende, welches bspw. auch als zweites Koppelschenkelende des ersten Koppelschenkels 16b bezeichnet werden kann, ein erstes Gelenkbolzen-Durchgangsloch aufweisen. Ebenso kann der zweite Koppelschenkel 16c an einem dem ersten Koppelschenkelende des zweiten Koppelschenkels 16c entgegengesetzten Ende, welches bspw. auch als zweites Koppelschenkelende des zweiten Koppelschenkels 16c bezeichnet werden kann, ein zweites Gelenkbolzen-Durchgangsloch aufweisen. Bevorzugt erstreckt sich der Gelenkbolzen 16d (z. B. ein erstes Ende des Gelenkbolzens 16d) durch das erste und zweite Gelenkbolzen-Durchgangsloch. Entsprechend können das erste und zweite Gelenkbolzen-Durchgangsloch fluchtend zueinander angeordnet sein. Zudem oder alternativ kann der Gelenkbolzen 16d (z. B. das erste Ende des Gelenkbolzens 16d) zumindest abschnittsweise in dem ersten und zweiten Gelenkbolzen-Durchgangsloch (z. B. schwenkbar) aufgenommen sein. Bevorzugt ist der Gelenkbolzen 16d bzw. dessen erstes Ende dabei mittels einer Gleitlagerung in dem ersten und zweiten Gelenkbolzen-Durchgangsloch aufgenommen.

Wie bspw. aus den Figuren 1, 2, 3A-3C und 5 ersichtlich ist, kann an dem Gelenkbolzens 16d ferner auch der Koppelarm 16a angelenkt sein. Beispielsweise kann der Koppelarm 16a und/oder ein Ende des Koppelarm 16a, welches bspw. auch als erstes Koppelarmende bezeichnet werden kann, ein Durchgangsloch aufweisen, durch das sich der Gelenkbolzen 16d (z. B. dessen erstes Ende) erstreckt und/oder in dem der Gelenkbolzen 16d zumindest abschnittsweise (z. B. schwenkbar) aufgenommen ist. Das Durchgangsloch des Koppelarms 16a bzw. dessen erstes Endes ist dabei bevorzugt fluchtend zu dem ersten Gelenkbolzen-Durchgangsloch des ersten Koppelschenkels 16b und dem zweiten Gelenkbolzen-Durchgangsloch des zweiten Koppelschenkels 16c angeordnet. Weiterhin bevorzugt ist der Koppelarm 16a bzw. dessen erstes Ende (z. B. bezüglich einer Axialrichtung des Gelenkbolzen 16d) zwischen dem ersten und zweiten Koppelschenkel 16b, 16c angeordnet.

Der Koppelarm 16a kann ferner ein dem ersten Koppelarmende entgegengesetztes zweites Koppelarmende aufweisen. Das erste und zweite Koppelarmende können distale Enden des Koppelarms bzgl. einer Haupterstreckungsrichtung L des Koppelarms 16a sein. Die Haupterstreckungsrichtung L kann bspw. der (Haupt-)Längsachse des Koppelarms 16a entsprechen. Das zweite Koppelarmende ist bevorzugt in dem vorgenannten Führungsabschnitt 15 entlang der Führungsrichtung F verschiebbar geführt, vgl. z. B. Figuren 3A-3C. Entsprechend kann das zweite Koppelarmende z. B. frei und/oder nicht befestigt sein. Wie weiterhin aus den Figuren 3A-3C ersichtlich ist, erstreckt sich die Haupterstreckungsrichtung L des Koppelarms 16a entlang der Führungsrichtung F.

Vorzugsweise weist der Koppelarm 16a und/oder dessen zweites Koppelarmende senkrecht zur Führungsrichtung F eine zu einer Innenkontur des Führungsabschnitts 15 korrespondierende und/oder angepasste Außenkontur auf, vgl. z. B. Figur 6. Beispielsweise kann der der Koppelarm 16a und/oder dessen zweites Koppelarmende formangepasst zum Führungsabschnitt 15 ausgebildet sein. In der vorliegenden Ausführungsform kann der der Koppelarm 16a und/oder dessen zweites Koppelarmende zumindest abschnittsweise blockförmig und/oder stabförmig ausgebildet sein und/oder entlang seiner Haupterstreckungsrichtung (z. B. Längsrichtung) einen im Wesentlichen konstanten Querschnitt (z. B. in Form eines Rechtecks mit zwei geraden Längskanten und zwei nach außen gewölbten Querkanten) aufweisen. Grundsätzlich kann der Koppelarm 16a und/oder dessen zweites Koppelarmende allerdings auch - abhängig von der Ausführung des Führungsabschnitts 15 - zylinderförmig und/oder quaderförmig ausgebildet sein. Bevorzugt ist die Haupterstreckungsrichtung des Koppelarm 16a parallel und/oder entlang der Führungsrichtung F orientiert.

Zwischen dem Führungsabschnitt 15 und dem Koppelarm 16a und/oder zwischen dem Führungsabschnitt 15 und dem zweiten Koppelarmende besteht bevorzugt ein Flächenkontakt. Zudem oder alternativ kann (z. B. bei ausreichendem Bauraum) auch eine Kugelumlaufhülse und/oder ein Linearkugellager zwischen dem Koppelarm 16a und dem Führungsabschnitt 15 angeordnet sein. Entsprechend kann der Koppelarm 16a und/oder dessen zweites Koppelarmende mehrseitig (z. B. zumindest drei- oder vierseitig) von dem Führungsabschnitt 15 umgegeben sein und/oder entlang der Führungsrichtung F mehrseitig (z. B. zumindest drei- oder vierseitig) von dem Führungsabschnitt 15 geführt sein. Wie bspw. den Figur 6 zu entnehmen ist, kann der Koppelarm 16a zwei seitliche Kontaktflächen, die jeweils mit einer der seitlichen Führungsflächen 15a, 15b in Kontakt stehen, eine Grundkontaktfläche, die mit der Grundführungsfläche 15c in Kontakt steht, und eine Deckenkontaktfläche, die mit der Deckführungsfläche 15d in Kontakt steht, aufweisen. Der Koppelarm 16a kann somit sowohl seitlich als auch von oben und unten geführt und/oder abgestützt sein.

Bevorzugt ist der Koppelarm 16a weiterhin zumindest abschnittsweise winkelhalbierend zwischen dem ersten und zweiten Koppelschenkel 16b, 16c angeordnet und/oder winkelhalbierend zwischen dem ersten und zweiten Koppelschenkel 16b, 16c geführt. Beispielsweise kann der Koppelarm 16a in einer Ebene senkrecht zu einer Haupterstreckungsrichtung des Gelenkbolzens (vgl. Figuren 3A-3C) zumindest abschnittsweise (z. B. winkelhalbierend) zwischen dem ersten und zweiten Koppelschenkel 16b, 16c angeordnet sein. Durch das Zusammenspiel mit der vorstehend beschriebenen Anbindung der Koppeleinrichtung 16 sowohl an den ersten und zweiten Befestigungsschenkels 12a, 12b als auch an die Reflektoreinrichtung 14 kann eine Zwangsbedingung für die Positionierung der Reflektoreinrichtung 14 bzw. deren Reflexionsfläche 14a relativ zum ersten und zweiten Befestigungsschenkels 12a, 12b realisiert werden, welche ein zuverlässiges "Mitführen" der Reflektoreinrichtung 14 bei einem Verschwenken des ersten und zweiten Befestigungsschenkel 12a, 12b ermöglicht.

Im Detail sind der erste und zweite Befestigungsschenkel 12a, 12b sowie die Reflektoreinrichtung 14 über die Koppeleinrichtung 16 derart miteinander bewegungsgekoppelt verbunden, dass bei einem Verschwenken des ersten und zweiten Befestigungsschenkels 12a, 12b relativ zueinander um einen Schwenkwinkel α, die Reflektoreinrichtung 14 bzw. deren Reflexionsfläche 14a den halben Schwenkwinkel α relativ zum ersten und/oder zweiten Befestigungsschenkel 12, 12b mitverschwenkt wird. Entsprechend kann die Vorrichtung 10 dazu ausgebildet sein, dass die Reflektoreinrichtung 14 bei einem Verschwenken des ersten und zweiten Befestigungsschenkels 12a, 12b relativ zueinander auf der Winkelhalbierenden zwischen dem ersten und zweiten Befestigungsschenkel 12a, 12b mitgeführt wird. Bevorzugt ist somit in jeder (möglichen) Schwenkstellung eine Hauptachse der Reflexionsfläche 14a und/oder eine Senkrechte zu einer Erstreckungsebene der Reflexionsfläche 14a winkelhalbierend zwischen dem ersten und zweiten Befestigungsschenkel 12a, 12b angeordnet und/oder parallel zu einer Winkelhalbierenden eines Scheitelwinkels σ des ersten und zweiten Befestigungsschenkels 12a, 12b orientiert.

Der Scheitelwinkel σ zwischen dem ersten und zweiten Befestigungsschenkel 12a, 12b kann dabei zwischen 50° und 130° betragen (vgl. z. B. Figuren 3A-3C). Bevorzugt weist die Vorrichtung 10 somit einen minimalen Scheitelwinkel σₘᵢₙ von 50° auf, unterhalb dessen der erste und zweite Befestigungsschenkel 12a, 12b vorzugsweise nicht weiter aneinander angenähert werden können. Zudem oder alternativ kann die Vorrichtung einen maximalen Scheitelwinkel σₘₐₓ von 130° aufweisen, oberhalb dessen der erste und zweite Befestigungsschenkel 12a, 12b vorzugsweise nicht weiter voneinander entfernt werden können. Entsprechend können der erste Befestigungsschenkel 12a und der zweite Befestigungsschenkel 12b bspw. in einem Scheitelwinkelintervall zwischen 50° und 130° kontinuierlich relativ zueinander (z. B. um den oder einen Schwenkwinkel) verschwenkbar sein.

Wie bspw. aus Figur 1 ersichtlich kann die Vorrichtung 10 für eine verbesserte Anbindung an das erste und zweite Strahlführungsteil 22a, 22b einen weiteren ersten Befestigungsschenkel 12a' und einen weiteren zweiten Befestigungsschenkel 12b' aufweisen. Der weitere erste Befestigungsschenkel 12a' kann dabei grundsätzlich die Merkmale des ersten Befestigungsschenkels 12a aufweisen und bspw. ebenfalls an dem ersten Strahlführungsteil 22a anschraubbar oder angeschraubt sein, vgl. Figuren 10 bis 12. Weiterhin kann auch der weitere zweite Befestigungsschenkel 12b' prinzipiell die Merkmale des zweiten Befestigungsschenkels 12b aufweisen und bspw. ebenfalls an dem zweiten Strahlführungsteil 22b anschraubbar oder angeschraubt sein, vgl. Figuren 10 bis 12.

Bevorzugt ist die Baugruppe, aufweisend den weiteren ersten Befestigungsschenkel 12a' und den weiteren zweiten Befestigungsschenkel 12b', eine Kopie der Baugruppe, aufweisend den ersten Befestigungsschenkel 12a und den zweiten Befestigungsschenkel 12b. Vorzugsweise sind die beiden Baugruppen allerdings um 180° gedreht zueinander orientiert. Entsprechend können der weitere erste Befestigungsschenkel 12a' und der zweite Befestigungsschenkel 12b baugleich ausgebildet sein. Beispielsweise kann es sich bei dem weiteren ersten Befestigungsschenkel 12a' und dem zweiten Befestigungsschenkel 12b um Gleichteile handeln, die jedoch bspw. unterschiedlich orientiert in der Vorrichtung 10 angeordnet sein können. Zudem oder alternativ können der weitere zweite Befestigungsschenkel 12b' und der erste Befestigungsschenkel 12a baugleich ausgebildet sein. Beispielsweise kann es sich bei dem weiteren zweiten Befestigungsschenkel 12b' und dem ersten Befestigungsschenkel 12a um Gleichteile handeln, die jedoch bspw. unterschiedlich orientiert in der Vorrichtung 10 angeordnet sein können. Weiterhin können die Baugruppe, aufweisend den weiteren ersten Befestigungsschenkel 12a' und den weiteren zweiten Befestigungsschenkel 12b', und die Baugruppe, aufweisend den ersten Befestigungsschenkel 12a und den zweiten Befestigungsschenkel 12b konstant voneinander beabstandet sein, direkt oberhalb voneinander angeordnet sein und/oder einander gegenüberliegend angeordnet sein.

Der weitere erste Befestigungsschenkel 12a' und der weitere zweite Befestigungsschenkel 12b' können gelenkig miteinander verbunden sein, beispielsweise über ein weiteres Hauptdrehgelenk 13', vgl. z.B. Figur 1. Das weitere Hauptdrehgelenk 13' kann dabei wie das Hauptdrehgelenk 13 ausgebildet sein. Bevorzugt sind die jeweiligen Schwenkachsen des Hauptdrehgelenks 13 und das weitere Hauptdrehgelenks 13' hierbei gleich und/oder kollinear zueinander orientiert. Beispielsweise können das Hauptdrehgelenk 13 und das weitere Hauptdrehgelenk 13' fluchtend zueinander und/oder direkt übereinander angeordnet sein, z. B. an einer Ober- und Unterseite der Reflektoreinrichtung 14.

Der weitere erste Befestigungsschenkel 12a' und der weitere zweite Befestigungsschenkel 12b' können ferner mit der Koppeleinrichtung 16 verbunden sein. Hierzu kann die Koppeleinrichtung 16 zusätzlich einen weiteren ersten Koppelschenkel 16b' und einen weiteren zweiten Koppelschenkel 16c' aufweisen.

Der weitere erste Koppelschenkel 16b' kann mit dem weiteren ersten Befestigungsschenkel 12a' gelenkig verbunden sein. Beispielsweise können der weitere erste Koppelschenkel 16b' und der weitere erste Befestigungsschenkel 12a' mittels eines weiteren ersten Drehgelenks 19a' gelenkig miteinander verbunden sein, wobei das weitere erste Drehgelenk 19a' grundsätzlich wie das vorstehend beschriebene erste Drehgelenk 19a ausgebildet sein kann bzw. die Anbindung des weiteren ersten Koppelschenkels 16b' an den weiteren ersten Befestigungsschenkel 12a' wie die Anbindung des ersten Koppelschenkels 16b' an den ersten Befestigungsschenkel 12a ausgebildet sein kann.

Ebenso kann der weitere zweite Koppelschenkel 16c' mit dem weiteren zweiten Befestigungsschenkel 12b' gelenkig verbunden sein. Beispielsweise können der weitere zweite Koppelschenkel 16c' und der weitere zweite Befestigungsschenkel 12b' mittels eines weiteren zweiten Drehgelenks 19b' gelenkig miteinander verbunden sein, wobei das weitere zweite Drehgelenk 19b' grundsätzlich wie das vorstehend beschriebene zweite Drehgelenk 19b ausgebildet sein kann bzw. die Anbindung des weiteren zweiten Koppelschenkels 16c' an den weiteren zweiten Befestigungsschenkel 12b' wie die Anbindung des zweiten Koppelschenkels 16c' an den zweiten Befestigungsschenkel 12b ausgebildet sein kann.

Bevorzugt stellt hierbei die Baugruppe, aufweisend den weitere ersten Koppelschenkel 16b' und den weiteren zweiten Koppelschenkel 16c', eine Kopie der Baugruppe, aufweisend den ersten Koppelschenkel 16b und den zweiten Koppelschenkel 16c, dar. Vorzugsweise sind diese beiden Baugruppen allerdings um 180° gedreht zueinander orientiert. Entsprechend können der weitere erste Koppelschenkel 16b' und der zweite Koppelschenkel 16c baugleich ausgebildet sein. Beispielsweise kann es sich bei dem weiteren ersten Koppelschenkel 16b' und dem zweiten Koppelschenkel 16c um Gleichteile handeln, die jedoch bspw. unterschiedlich orientiert in der Vorrichtung 10 angeordnet sein können. Zudem oder alternativ können der weitere zweite Koppelschenkel 16c' und der erste Koppelschenkel 16b baugleich ausgebildet sein. Beispielsweise kann es sich bei dem weiteren zweiten Koppelschenkel 16c' und dem ersten Koppelschenkel 16b um Gleichteile handeln, die jedoch bspw. unterschiedlich orientiert in der Vorrichtung 10 angeordnet sein können. Weiterhin können die Baugruppe, aufweisend den weiteren ersten Koppelschenkel 16b' und den weiteren zweiten Koppelschenkel 16c', und die Baugruppe, aufweisend den ersten Koppelschenkel 16b und den zweiten Koppelschenkel 16c konstant voneinander beabstandet sein, direkt oberhalb voneinander angeordnet sein und/oder einander gegenüberliegend angeordnet sein.

Der weitere erste Koppelschenkel 16b' und der weitere zweite Koppelschenkel 16c' können mittels des Gelenkbolzens 16d gelenkig miteinander verbunden sein. Beispielsweise kann sowohl der weitere erste Koppelschenkel 16b' als auch der weitere zweite Koppelschenkel 16c' jeweils ein entsprechendes Gelenkbolzen-Durchgangsloch aufweisen, die fluchtend zueinander angeordnet sein können und/oder durch die der Gelenkbolzen 16d hindurchgeführt sein kann. Bevorzugt ist der Gelenkbolzen 16d somit an dessen erstem Ende mit dem ersten und zweiten Koppelschenkel 16b, 16c und dessen zweitem Ende mit dem weiteren ersten und weiteren zweiten Koppelschenkel 16b', 16c' verbunden.

Wie bspw. aus den Figuren 1, 2, 4, 6 und 7 ersichtlich ist, kann an dem Gelenkbolzens 16d ferner ein weiterer Koppelarm 16a' angelenkt sein. Dieser kann grundsätzlich wie der Koppelarm 16a ausgebildet sein und in einem weiteren Führungsabschnitt 15' der Reflektoreinrichtung 14 (z. B. verschiebbar) aufgenommen sein. Analog zum Führungsabschnitt 15 kann auch der weiteren Führungsabschnitt 15' mehrere weitere Führungsflächen 15a', 15b', 15c', 15d', bspw. zwei weitere seitliche Führungsflächen 15a', 15b', eine weitere Grundführungsfläche 15c' und eine weitere Deckführungsfläche 15d' umfassen, vgl. Figur 6. Bevorzugt ist der weitere Führungsabschnitt 15' dabei identisch zum Führungsabschnitt 15 ausgebildet. Der weitere Führungsabschnitt 15' und der Führungsabschnitt 15 bzw. der weitere Koppelarm 16a' und der Koppelarm 16a können jedoch grundsätzlich auch unterschiedlich ausgebildet sein.

Durch die mehrfache Ausführung der Koppeleinrichtung 16 samt zugehöriger Befestigungsschenkel 12a, 12b, 12a', 12b' kann insgesamt eine stabile und sichere Kopplung des ersten und zweiten Strahlführungsteils 22a, 22b mit der Reflektoreinrichtung 14 erreicht werden, welche sicherstellt, dass die Reflektoreinrichtung 14 bei einem Verschwenken der Befestigungsschenkel 12a, 12b, 12a', 12b' relativ zueinander auf der entsprechenden Winkelhalbierenden mitgeführt wird, sodass wie im Zusammenhang mit den nachfolgend noch eingehender beschriebenen Systemen 20 ersichtlich wird, unabhängig Schwenkstellung der Befestigungsschenkel 12a, 12b, 12a', 12b' eine Umlenkung des Licht- und/oder Mikrowellenstrahls 1 von dem ersten zum zweiten Strahlführungsteil 22a, 22b, oder umgekehrt, gewährleistet ist.

Die Figuren 10 bis 12 zeigen verschiedene Ausführungsformen eines Systems 20 zur Strahlführung eines Licht- und/oder Mikrowellenstrahls 1. Das System 20 weist dabei ein erstes Strahlführungsteil 22a, ein zweites Strahlführungsteil 22b und eine Vorrichtung 10, wie hierin beschrieben auf.

Das erste Strahlführungsteil 22a kann z. B. als ein (erstes) Strahlführungsrohr ausgebildet sein und/oder zumindest einen Rohrabschnitt aufweisen. Beispielsweise kann das erste Strahlführungsteil 22a eine längliche, umfangsseitig geschlossene und/oder röhrenförmige Form aufweisen. Lediglich beispielhaft kann das erste Strahlführungsteil 22a als Hohlprofil ausgebildet sein und/oder zumindest einen Hohlprofilabschnitt aufweisen. Bevorzugt dient das erste Strahlführungsteil 22a zur Führung des Licht- und/oder Mikrowellenstrahls 1 (z. B. als Freistrahl) und/oder zur Abschirmung eines (z. B. inneren) Strahlführungsbereichs. Hierzu kann das erste Strahlführungsteil 22a aus einem lichtdichten Material, bspw. Metall, gefertigt sein.

Das erste Strahlführungsteil 22a kann (z. B. im Strahlengang) zumindest ein Element zum Manipulieren und/oder Fokussieren des Licht- und/oder Mikrowellenstrahls 1 umfassen (nicht dargestellt). Das zumindest eine Element kann bspw. eine Linse, einen Filter und/oder einen Polarisator aufweisen. Lediglich beispielhaft kann das erste Strahlführungsteil 22a zumindest einen Schlitz zum Einsetzen der Linse, des Filters und/oder des Polarisators aufweisen. Der zumindest einen Schlitz kann bei Nichtbenutzung blindgedeckelt sein.

Das erste Strahlführungsteil 22a kann ein erstes Ende und ein, vorzugsweise dem ersten Ende entgegengesetztes, zweites Ende aufweisen. Das erste Strahlführungsteil 22a kann ferner teleskopartig längenverstellbar sein. Beispielsweise kann das erste Strahlführungsteil 22a einen Außenrohrabschnitt, einen Innenrohrabschnitt und mindestens ein (z. B. ringförmiges) Wälzlager (z. B. mit mehreren Wälzkörpern) aufweisen. Bevorzugt ist der Innenrohrabschnitt im Außenrohrabschnitt längsverschieblich eingesetzt und/oder das mindestens eine Wälzlager zwischen dem Innenrohrabschnitt und dem Außenrohrabschnitt angeordnet ist. Beispielsweise kann der Innenrohrabschnitt über das mindestens eine Wälzlager mit dem Außenrohrabschnitt verbunden sein, vorzugsweise derart, dass bei einem Längsverschieben des Innenrohrabschnitts relativ zum Außenrohrabschnitt die Wälzkörper an einer Lauffläche des Außenrohrabschnitts, des Innenrohrabschnitts und/oder des mindestens einen Wälzlagers abrollen. Besonders bevorzugt weist das mindestens eine Wälzlagers mindestens zwei Wälzlager auf, die vorzugsweise (z. B. entlang einer Längsachse des ersten Strahlführungsteils 22a) beabstandet voneinander angeordnet sein können.

Das zweite Strahlführungsteil 22b kann grundsätzlich wie das erste Strahlführungsteil 22a ausgebildet sein. Entsprechend kann das zweite Strahlführungsteil 22b die vorstehend im Zusammenhang mit dem ersten Strahlführungsteil 22a beschriebenen Merkmale aufweisen, wobei der Ausdruck "erste" durch "zweite" zu ersetzen ist. Insbesondere kann somit auch das zweite Strahlführungsteil 22b einen Außenrohrabschnitt 22b.1, einen Innenrohrabschnitt 22b.2 und mindestens ein (z. B. ringförmiges) Wälzlager 21b (z. B. mit mehreren Wälzkörpern) aufweisen. Lediglich beispielhaft können der erste und zweite Strahlführungsteil 22a und 22b als Gleichteile ausgebildet sein und/oder gleich lang, gleich breit und/oder gleich dick sein. Wie in den gezeigten Ausführungsformen ersichtlich ist, können das erste und zweite Strahlführungsteil 22a, 22b allerdings auch unterschiedlich lang ausgebildet sein und/oder nicht beide teleskopartig längenverstellbar sein.

Das erste Strahlführungsteil 22a und das zweite Strahlführungsteil 22b können mittels der Vorrichtung 10 gelenkig verbunden sein. Beispielsweise kann der erste Befestigungsschenkel 12a der Vorrichtung 10 am ersten Strahlführungsteil 22a (z. B. an dessen ersten Ende) befestigt (z. B. angeschraubt) sein und/oder der zweite Befestigungsschenkel 12b der Vorrichtung 10 am zweiten Strahlführungsteil 22b (z. B. an dessen ersten Ende) befestigt (z. B. angeschraubt) sein. Zusätzlich kann auch der weitere erste Befestigungsschenkel 12a' der Vorrichtung 10 am ersten Strahlführungsteil 22a (z. B. an dessen ersten Ende) befestigt (z. B. angeschraubt) sein und/oder der weitere zweite Befestigungsschenkel 12b' der Vorrichtung 10 am zweiten Strahlführungsteil 22b (z. B. an dessen ersten Ende) befestigt (z. B. angeschraubt) sein. Bevorzugt fungiert die Vorrichtung 10 somit als Gelenk zwischen dem ersten und zweiten Strahlführungsteil 22a, 22b, sodass vorzugsweise ein Verschwenken des ersten und zweiten Strahlführungsteils 22a relativ zueinander ermöglicht wird, wobei das vorstehend beschriebe Mitführen der Reflektoreinrichtung 14 dafür sorgt, dass der Licht- und/oder Mikrowellenstrahl 1 dabei vom ersten zum zweiten Strahlführungsteil 22a, 22b oder umgekehrt geführt und/oder umgelenkt wird.

In einer (nicht dargestellten) Ausführungsform weist das System 20 neben dem ersten und zweiten Strahlführungsteil 22a, 22b keine weiteren Strahlführungsteile auf. Entsprechend soll das System 20 hier bevorzugt ausschließlich eine Gelenkverbindung aufweisen. Zur Anbindung des Systems 20 an weitere Komponenten, bspw. zwei Vakuumanlagen, kann das erste Strahlführungsteil 22a (z.B. dessen zweites Ende) einen ersten Flansch aufweisen und das erste Strahlführungsteil 22a (z.B. dessen zweites Ende) einen zweiten Flansch aufweisen. Der erste und/oder zweite Flansch kann dabei drehbar sein und/oder mehrere Durchgangsöffnungen zur Aufnahme von Befestigungselementen aufweisen.

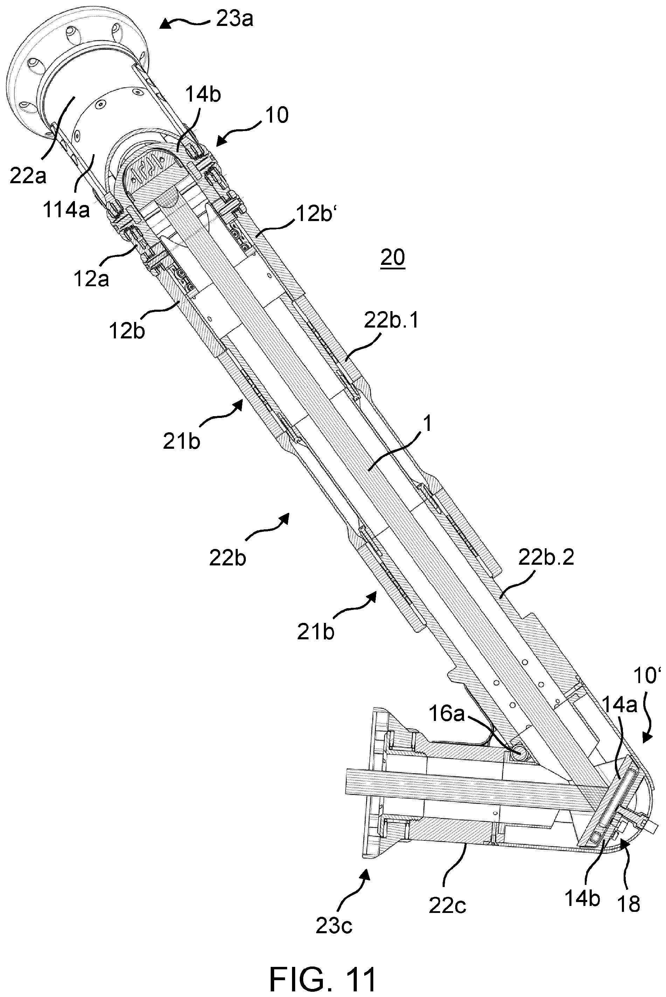

In der in den Figuren 10 und 11 dargestellten weiteren Ausführungsform weist das System 20 neben dem ersten und zweiten Strahlführungsteil 22a, 22b zusätzlich ein drittes Strahlführungsteil 22c auf. Dieses kann grundsätzlich wiederum die Merkmale des ersten bzw. zweiten Strahlführungsteil 22a, 22b aufweisen, bspw. röhrenförmig und/oder teleskopartig längenverstellbar sein. Weiterhin weist das System 20 in dieser Ausführungsform zusätzlich zur Vorrichtung 10 eine weitere Vorrichtung 10' auf. Diese kann wie die Vorrichtung 10 ausgebildet sein und/oder die hierin im Zusammenhang mit der Vorrichtung 10 beschriebenen Merkmale aufweisen. Bevorzugt sind die Vorrichtung 10 und die weitere Vorrichtung 10 als Gleichteile ausgebildet und/oder ausgeführt.

Wie in den Figuren 10 und 11 dargestellt, sind das zweite Strahlführungsteil 22b und das dritte Strahlführungsteil 22c mittels der weiteren Vorrichtung 10' gelenkig verbunden. Beispielsweise kann dazu ein erster Befestigungsschenkel 12a der weiteren Vorrichtung 10' am zweiten Strahlführungsteil 22b (z. B. an dessen zweiten Ende) befestigt sein und ein zweiter Befestigungsschenkel 12b der weiteren Vorrichtung 10' am dritten Strahlführungsteil 22c (z. B. an dessen ersten Ende) befestigt sein. Zusätzlich kann auch ein weiterer erster Befestigungsschenkel 12a' der weiteren Vorrichtung 10' am zweiten Strahlführungsteil 22b (z. B. an dessen zweiten Ende) befestigt (z. B. angeschraubt) sein und/oder ein weiterer zweiter Befestigungsschenkel 12b' der weiteren Vorrichtung 10' am dritten Strahlführungsteil 22c (z. B. an dessen ersten Ende) befestigt (z. B. angeschraubt) sein. Bevorzugt fungiert die weitere Vorrichtung 10' somit als Gelenk zwischen dem zweiten und dritten Strahlführungsteil 22b, 22c, sodass vorzugsweise ein Verschwenken des zweiten und dritten Strahlführungsteils 22b, 22c relativ zueinander ermöglicht wird. Insgesamt ist in dieser (zweigelenkigen) Ausführungsform das System 20 zumindest abschnittsweise um zwei verschiedene Schwenkachsen verschwenkbar.

Um eine möglichst große Flexibilität bei der Anordnung des Systems 20 zu erreichen, ist das zweite Strahlführungsteil 22b teleskopartig längenverstellbar und/oder das erste und zweite Ende des zweiten Strahlführungsteils 22b gegeneinander verdrehbar. Beispielsweise kann der das erste Ende aufweisende Innenrohrabschnitt 22b.2 des zweiten Strahlführungsteils 22b gegen den, das zweite Ende aufweisenden, Außenrohrabschnitt 22b.1 des zweiten Strahlführungsteils 22b drehbar sein. Weiterhin können das erste und dritte Strahlführungsteil 22a, 22c bevorzugt jeweils einen (z. B. drehbaren) Flansch zur Befestigung an einem Fensterflansch einer Vakuumanlage aufweisen, wobei der Flansch des ersten Strahlführungsteils 22a bspw. auch als erster Flansch 23a und der Flansch des dritten Strahlführungsteils 22c bspw. auch als dritter Flansch 23c bezeichnet werden kann. Zudem oder alternativ können das erste und dritte Strahlführungsteil 22a, 22c nicht teleskopartig längenverstellbar sein.

In einer (nicht dargestellten) Variante kann zwischen der Vorrichtung 10 und der weiteren Vorrichtung 10' ein (z. B. flexibler) Teil eines Vakuumgefäßes angeordnet sein, bei dem bspw. Messungen oder Manipulationen des Licht- und/oder Mikrowellenstrahl 1 vorgenommen werden können.

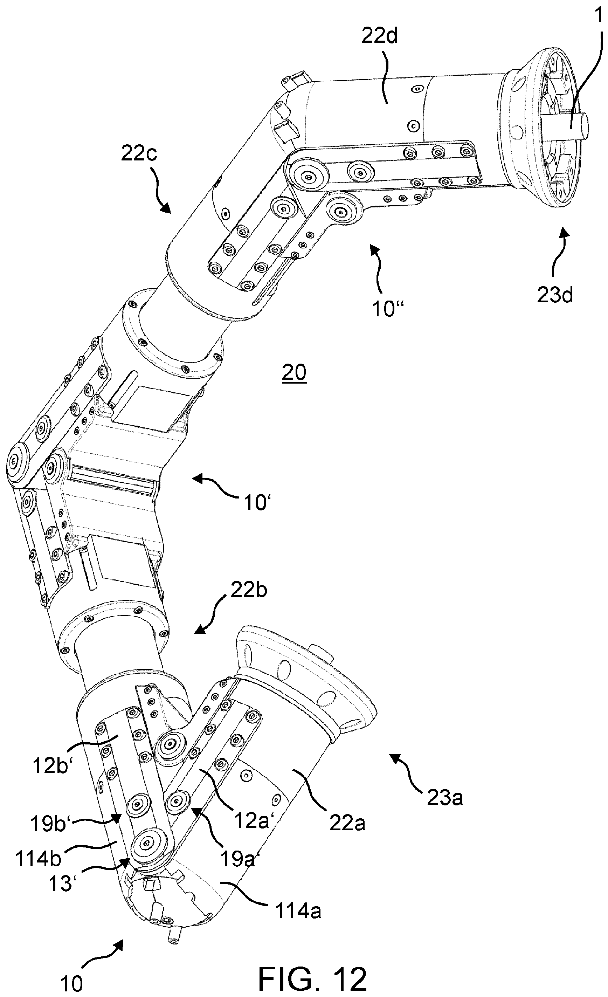

Die in Figur 12 dargestellte Ausführungsform basiert auf der eben beschriebenen Ausführungsform. Zusätzlich zum ersten, zweiten und dritten Strahlführungsteil 22a, 22b, 22c weist das System 20 hier auch noch ein viertes Strahlführungsteil 22d auf. Dieses kann grundsätzlich wiederum die Merkmale des ersten, zweiten bzw. dritten Strahlführungsteil 22a, 22b, 22c aufweisen, bspw. röhrenförmig und/oder teleskopartig längenverstellbar sein. Weiterhin weist das System 20 in dieser Ausführungsform zusätzlich zur Vorrichtung 10 und der weiteren Vorrichtung 10' eine nochmals weitere Vorrichtung 10" auf. Die nochmals weitere Vorrichtung 10" kann dabei wie die Vorrichtung 10 bzw. weitere Vorrichtung 10' ausgebildet sein und/oder die hierin im Zusammenhang mit der Vorrichtung 10 bzw. weitere Vorrichtung 10' beschriebenen Merkmale aufweisen. Bevorzugt sind die Vorrichtung 10, die weitere Vorrichtung 10 und die nochmals weitere Vorrichtung 10" als Gleichteile ausgebildet und/oder ausgeführt.

Wie in Figur 12 dargestellt, sind das dritte Strahlführungsteil 22c und das vierte Strahlführungsteil 22d mittels der nochmals weiteren Vorrichtung 10" gelenkig verbunden. Beispielsweise kann dazu ein erster Befestigungsschenkel 12a der nochmals weiteren Vorrichtung 10" am dritten Strahlführungsteil 22c (z. B. an dessen zweiten Ende) befestigt sein und ein zweiter Befestigungsschenkel 12b der nochmals weiteren Vorrichtung 10" am vierten Strahlführungsteil 22d (z. B. an dessen ersten Ende) befestigt sein. Zusätzlich kann auch ein weiterer erste Befestigungsschenkel 12a' der nochmals weiteren Vorrichtung 10" am dritten Strahlführungsteil 22c (z. B. an dessen zweiten Ende) befestigt (z. B. angeschraubt) sein und/oder ein weiterer zweiter Befestigungsschenkel 12b' der nochmals weiteren Vorrichtung 10" am vierten Strahlführungsteil 22d (z. B. an dessen ersten Ende) befestigt (z. B. angeschraubt) sein. Bevorzugt fungiert die nochmals weitere Vorrichtung 10" somit als Gelenk zwischen dem dritten und vierten Strahlführungsteil 22c und 22d, sodass vorzugsweise ein Verschwenken des dritten und vierten Strahlführungsteils 22c, 22d relativ zueinander ermöglicht wird. Insgesamt ist in dieser (dreigelenkigen) Ausführungsform das System 20 zumindest abschnittsweise um drei verschiedene Schwenkachsen verschwenkbar.

Um eine möglichst große Flexibilität bei der Anordnung des Systems 20 zu erreichen, sind das zweite und dritte Strahlführungsteil 22b, 22c teleskopartig längenverstellbar. Ferner kann das erste und zweite Ende des zweiten Strahlführungsteils 22b gegeneinander verdrehbar sein. Beispielsweise kann der das erste Ende aufweisende Innenrohrabschnitt 22b.2 des zweiten Strahlführungsteils 22b gegen den, das zweite Ende aufweisenden, Außenrohrabschnitt 22b.1 des zweiten Strahlführungsteils 22bdrehbar sein. Zusätzlich kann das erste und zweite Ende des dritten Strahlführungsteils 22c gegeneinander verdrehbar sein. Beispielsweise kann der das erste Ende aufweisende Innenrohrabschnitt 22c.2 des dritten Strahlführungsteils 22c gegen den, das zweite Ende aufweisenden, Außenrohrabschnitt 22c.1 des dritten Strahlführungsteils 22c drehbar sein. Weiterhin können das erste und vierte Strahlführungsteil 22a, 22d bevorzugt jeweils einen (z. B. drehbaren) Flansch zur Befestigung an einem Fensterflansch einer Vakuumanlage aufweisen, wobei der Flansch des ersten Strahlführungsteils 22a bspw. wiederum als erster Flansch 23a und der Flansch des vierten Strahlführungsteils 22c bspw. als vierter Flansch 23d bezeichnet werden kann. Zudem oder alternativ können das erste und vierte Strahlführungsteil 22a, 22d nicht teleskopartig längenverstellbar sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

## Patentansprüche

1. Vorrichtung (10) zur Umlenkung eines Licht- und/oder Mikrowellenstrahls (1), aufweisend:
einen ersten Befestigungsschenkel (12a) zur Befestigung an einem ersten Strahlführungsteil (22a);
einen zweiten Befestigungsschenkel (12b) zur Befestigung an einem zweiten Strahlführungsteil (22b), wobei der erste Befestigungsschenkel (12a) und der zweite Befestigungsschenkel (12b) gelenkig miteinander verbunden sind;
eine schwenkbar gelagerte Reflektoreinrichtung (14) zur Umlenkung des Licht- und/oder Mikrowellenstrahls (1); und
eine Koppeleinrichtung (16), mittels derer die Reflektoreinrichtung (14), der erste Befestigungsschenkel (12a) und der zweite Befestigungsschenkel (12b) miteinander bewegungsgekoppelt verbunden sind, derart, dass bei einem Verschwenken des ersten und zweiten Befestigungsschenkels (12a, 12b) relativ zueinander um einen Schwenkwinkel (α), die Reflektoreinrichtung (14) um den halben Schwenkwinkel (α) relativ zum ersten und zweiten Befestigungsschenkel (12, 12b) verschwenkt wird;
**dadurch gekennzeichnet, dass**:
die Koppeleinrichtung (16) einen Koppelarm (16a) zum Verschwenken der Reflektoreinrichtung (14) aufweist, der in einem Führungsabschnitt (15), vorzugweise Führungskanal, der Reflektoreinrichtung (14) entlang einer Führungsrichtung (F) verschiebbar geführt ist; und
der Koppelarm (16a) eine Haupterstreckungsrichtung (L) aufweist, die entlang der Führungsrichtung (F) orientiert ist.

2. Vorrichtung (10) nach Anspruch 1, wobei:
zwischen dem Koppelarm (16a) und dem Führungsabschnitt (15) ein Flächenkontakt besteht; und/oder
zwischen dem Koppelarm (16a) und dem Führungsabschnitt (15) ein Wälzlager, vorzugsweise ein Linearkugellager, angeordnet ist.

3. Vorrichtung (10) nach Anspruch 1 oder 2, wobei die Koppeleinrichtung (16) ferner aufweist:
einen ersten Koppelschenkel (16b), der mit dem ersten Befestigungsschenkel (12a), vorzugsweise mittels eines ersten Wälzlagers, gelenkig verbunden ist;
einen zweiten Koppelschenkel (16c), der mit dem zweiten Befestigungsschenkel (12b), vorzugsweise mittels eines zweiten Wälzlagers, gelenkig verbunden ist; und
einen, vorzugsweise gleitgelagerten, Gelenkbolzen (16d), mittels dessen der erste und zweite Koppelschenkel (16b, 16c) gelenkig miteinander verbunden sind und an dem ferner der Koppelarm (16a) angelenkt ist.

4. Vorrichtung (10) nach Anspruch 3, wobei:
der Koppelarm (16a) aufweist: ein erstes Koppelarmende, durch das sich der Gelenkbolzen (16d) erstreckt, und ein, vorzugsweise dem ersten Koppelarmende entgegengesetztes, zweites Koppelarmende, das in dem Führungsabschnitt (15) entlang der Führungsrichtung (F) verschiebbar geführt ist; und/oder
der Koppelarm (16a) zwischen dem ersten und zweiten Koppelschenkel (16b, 16c) winkelhalbierend angeordnet und/oder geführt ist; und/oder
der Koppelarm (16a) zwischen dem Gelenkbolzen (16d) und der Reflektoreinrichtung (14) angeordnet ist.

5. Vorrichtung (10) nach einem der der vorherigen Ansprüche, wobei:
der Koppelarm (16a) in dem Führungsabschnitt (15) gleitgelagert ist; und/oder
der Führungsabschnitt (15) in einer Ebene senkrecht zur Haupterstreckungsrichtung (L) umfangsseitig geschlossen ist; und/oder
der Führungsabschnitt (15) den Koppelarm (16a) in einer Ebene senkrecht zur Haupterstreckungsrichtung (L) umgibt.

6. Vorrichtung (10) nach einem der vorherigen Ansprüche, wobei:
ein Abschnitt des Koppelarms (16a), der in dem Führungsabschnitt (15) verschiebbar geführt ist, zumindest abschnittsweise stabförmig, vorzugsweise quaderförmig oder zylinderförmig, ausgebildet ist und/oder entlang seiner Haupterstreckungsrichtung einen im Wesentlichen konstanten Querschnitt, vorzugsweise in Form eines Rechtecks mit zwei geraden Längskanten und zwei nach außen gewölbten Querkanten, aufweist; und/oder
ein Abschnitt des Koppelarms (16a), der in dem Führungsabschnitt (15) verschiebbar geführt ist, in einer Ebene senkrecht zur Haupterstreckungsrichtung (L) eine Außenkontur aufweist, die formentsprechend zu einer Innenkontur des Führungsabschnitt (15) in der Ebene senkrecht zur Haupterstreckungsrichtung (L) ausgebildet ist; und/oder
der Führungsabschnitt (15) den Koppelarm (16a) an mindestens drei verschiedenen Stellen stützt; und/oder
der Koppelarm (16a) entlang der Führungsrichtung (F) mindestens dreiseitig, vorzugsweise mindestens vierseitig, in dem Führungsabschnitt (15) geführt ist; und/oder
der Führungsabschnitt (15) mehrere parallel zur Führungsrichtung (F) orientierte Führungsflächen (15a-15d) aufweist, wobei die mehreren Führungsflächen (15a-15d) aufweisen:
zwei seitliche Führungsflächen (15a, 15b), die vorzugsweise parallel zueinander orientiert sind; und/oder
eine Grundführungsfläche (15c), die vorzugsweise senkrecht zu den zwei seitlichen Führungsflächen (15a, 15b) orientiert ist; und/oder
eine Deckführungsfläche (15d), die vorzugsweise senkrecht zu den zwei seitlichen Führungsflächen (15a, 15b) und parallel zur Grundführungsfläche (15c) orientiert ist.

7. Vorrichtung (10) nach einem der vorherigen Ansprüche, wobei die Reflektoreinrichtung (14) eine Temperiereinrichtung (17) aufweist, die vorzugsweise:
einen Zulaufanschluss (17a) für eine Zulaufleitung, einen Ablaufanschluss (17b) für eine Ablaufleitung und einen von einem Temperierfluid durchströmbaren Kühlkanal (17c), der den Zulaufanschluss (17a) und den Ablaufanschluss (17b) fluidisch miteinander verbindet, aufweist.

8. Vorrichtung (10) nach einem der vorherigen Ansprüche, wobei die Reflektoreinrichtung (14) aufweist:
eine Reflexionsfläche (14a) zum Umlenken des Licht- und/oder Mikrowellenstrahls (1), wobei vorzugsweise die Reflexionsfläche (14a) senkrecht zu einer Winkelhalbierenden zwischen dem ersten und zweiten Koppelschenkel (16a, 16b) orientiert ist; und
einen Reflexionsflächenträger (14b), der die Reflexionsfläche (14a) trägt und/oder an dem die Reflexionsfläche (14a), vorzugsweise verstellbar, angebracht ist.

9. Vorrichtung (10) nach Anspruch 8, wobei:
die Reflektoreinrichtung (14) eine Verstelleinrichtung (18) aufweist, über die die Reflexionsfläche (14a) mit dem Reflexionsflächenträger (14b) verbunden ist und mittels derer eine Position und/oder Orientierung der Reflexionsfläche (14a) relativ zu dem Reflexionsflächenträger (14b) einstellbar ist, wobei vorzugsweise die Verstelleinrichtung (18) aufweist:
mehrere Feinjustierschrauben und/oder Klemmschrauben mit Kontermuttern; und/oder
einen abnehmbaren, vorzugsweise kuppelförmigen, Deckel.

10. Vorrichtung (10) nach Anspruch 8 oder 9, wobei:
der Reflexionsflächenträger (14b) den Führungsabschnitt (15) aufweist; und/oder
der Führungsabschnitt (15) als Nut, Durchgangsloch oder Sackloch im Reflexionsflächenträger (14b) ausgebildet ist; und/oder
der Reflexionsflächenträger (14b), vorzugsweise mittels eines Hauptdrehgelenks, an den ersten und zweiten Befestigungsschenkel (12a, 12b) angelenkt ist.

11. Vorrichtung (10) nach einem der vorherigen Ansprüche, wobei:
der erste Befestigungsschenkel (12a) mehrere, vorzugsweise rasterförmig angeordnete, erste Durchgangslöcher (12a.1) zur Aufnahme von ersten Befestigungselementen (11a) aufweist; und/oder
der zweite Befestigungsschenkel (12b) mehrere, vorzugsweise rasterförmig angeordnete, zweite Durchgangslöcher (12b.1) zur Aufnahme von zweiten Befestigungselementen (11b) aufweist; und/oder
ein Scheitelwinkel (σ) zwischen dem ersten und zweiten Befestigungsschenkel (12a, 12b) zwischen 50° und 130° beträgt; und/oder
der ersten und zweiten Befestigungsschenkel (12a, 12b) in einem Scheitelwinkelintervall zwischen 50° und 130°, vorzugsweise kontinuierlich, relativ zueinander verschwenkbar sind.

12. Vorrichtung (10) nach einem der vorherigen Ansprüche, falls rückbezogen auf Anspruch 2, wobei:
die Vorrichtung (10) ferner aufweist:
einen weiteren ersten Befestigungsschenkel (12a') zur Befestigung an dem ersten Strahlführungsteil (22a);
einen weiteren zweiten Befestigungsschenkel (12b') zur Befestigung an dem zweiten Strahlführungsteil (22b), wobei der weitere erste Befestigungsschenkel (12a) und der weitere zweite Befestigungsschenkel (12b) gelenkig miteinander verbunden sind; und
die Koppeleinrichtung (16) ferner aufweist:
einen weiteren ersten Koppelschenkel (16b'), der mit dem weiteren ersten Befestigungsschenkel (12a) gelenkig verbunden ist;
einen weiteren zweiten Koppelschenkel (16c'), der mit dem weiteren zweiten Befestigungsschenkel (12a) gelenkig verbunden ist;
wobei der weitere erste Koppelschenkel (16b') und der weitere zweite Koppelschenkel (16c') mittels des Gelenkbolzens (16d) gelenkig verbunden sind.

13. Vorrichtung (10) nach Anspruch 12, wobei:
der weitere erste Befestigungsschenkel (12a') und der erste Befestigungsschenkel (12a) einander gegenüberliegend angeordnet, konstant voneinander beabstandet und/oder miteinander bewegungsgekoppelt sind; und/oder
der weitere zweite Befestigungsschenkel (12b') und der zweite Befestigungsschenkel (12b) einander gegenüberliegend angeordnet, konstant voneinander beabstandet und/oder miteinander bewegungsgekoppelt sind; und/oder
der weitere erste Koppelschenkel (16b') und der erste Koppelschenkel (16b) einander gegenüberliegend angeordnet, konstant voneinander beabstandet und/oder miteinander bewegungsgekoppelt sind; und/oder
der weitere zweite Koppelschenkel (16c') und der zweite Koppelschenkel (16c) einander gegenüberliegend angeordnet, konstant voneinander beabstandet und/oder miteinander bewegungsgekoppelt sind.

14. System (20) zur Strahlführung eines Licht- und/oder Mikrowellenstrahls (1), aufweisend:
ein, vorzugsweise röhrenförmiges, erstes Strahlführungsteil (22a);
ein, vorzugsweise röhrenförmiges, zweites Strahlführungsteil (22b); und
eine Vorrichtung (10) nach einem der vorherigen Ansprüche, wobei ein erster Befestigungsschenkel (12a) der Vorrichtung (10) am ersten Strahlführungsteil (22a) befestigt ist und ein zweiter Befestigungsschenkel (12b) der Vorrichtung (10) am zweiten Strahlführungsteil (22b) befestigt ist, sodass das erste und zweite Strahlführungsteil (22a, 22b) mittels der Vorrichtung (10) gelenkig miteinander verbunden sind.

15. System (20) nach Anspruch 14, wobei das erste und/oder zweite Strahlführungsteil (22a, 22b):
zumindest einen Rohrabschnitt aufweist; und/oder
teleskopartig längenverstellbar ist; und/oder
einen Außenrohrabschnitt (22b.1), einen Innenrohrabschnitt (22b.2) und mindestens ein, vorzugsweise ringförmiges, Wälzlager (21b) aufweist, wobei der Innenrohrabschnitt (22b.2) im Außenrohrabschnitt (22b.1) längsverschieblich eingesetzt ist und das mindestens eine Wälzlager (21b) zwischen dem Innenrohrabschnitt (22b.2) und dem Außenrohrabschnitt (22b.1) angeordnet ist.

16. System (20) nach Anspruch 14 oder 15, ferner aufweisend:
eine weitere Vorrichtung (10') nach einem der Ansprüche 1 bis 11; und
ein, vorzugsweise röhrenförmiges, drittes Strahlführungsteil (22c);
wobei ein erster Befestigungsschenkel (12a) der weiteren Vorrichtung (10') am zweiten Strahlführungsteil (22b) befestigt ist und ein zweiter Befestigungsschenkel (12b) der weiteren Vorrichtung (10') am dritten Strahlführungsteil (22c) befestigt ist, sodass das zweite und dritte Strahlführungsteil (22b, 22c) mittels der weiteren Vorrichtung (10') gelenkig miteinander verbunden sind;
wobei vorzugsweise:
das erste und dritte Strahlführungsteil (22a, 22c) jeweils einen, vorzugsweise drehbaren, Flansch (23a, 23c) zur Befestigung an einem Fensterflansch einer Vakuumanlage aufweisen und nicht teleskopartig längenverstellbar sind; und
das zweite Strahlführungsteil (22b) teleskopartig längenverstellbar ist.

17. System (20) nach Anspruch 16, ferner aufweisend:
eine nochmals weitere Vorrichtung (10") nach einem der vorherigen Ansprüche; und
ein, vorzugsweise röhrenförmiges, viertes Strahlführungsteil (22d);
wobei ein erster Befestigungsschenkel (12a) der nochmals weiteren Vorrichtung (10") am dritten Strahlführungsteil (22c) befestigt ist und ein zweiter Befestigungsschenkel (12b) der nochmals weiteren Vorrichtung (10") am vierten Strahlführungsteil (22d) befestigt ist, sodass das dritte und vierte Strahlführungsteil (22b, 22c) mittels der nochmals weiteren Vorrichtung (10") gelenkig miteinander verbunden sind;
wobei vorzugsweise das erste und vierte Strahlführungsteil (22a, 22d) jeweils einen, vorzugsweise drehbaren, Flansch (23a, 23d) zur Befestigung an einem Fensterflansch einer Vakuumanlage aufweisen und nicht teleskopartig längenverstellbar sind.

## Claims

1. Apparatus (10) for deflecting a light and/or microwave beam (1), comprising:
a first mounting leg (12a) for fastening to a first beam-guiding part (22a);
a second mounting leg (12b) for fastening to a second beam-guiding part (22b), wherein the first mounting leg (12a) and the second mounting leg (12b) are articulately connected to one another;
a pivotably mounted reflector device (14) for deflecting the light and/or microwave beam (1); and
a coupling device (16), by means of which the reflector device (14), the first mounting leg (12a) and the second mounting leg (12b) are connected to one another in a motion-coupled manner, such that upon pivoting of the first and second mounting legs (12a, 12b) relative to one another by a pivot angle (α), the reflector device (14) is pivoted by half the pivot angle (α) relative to the first and second mounting legs (12, 12b);
**characterized in that**
the coupling device (16) has a coupling arm (16a) for pivoting the reflector device (14), which coupling arm is displaceably guided along a guide direction (F) in a guide section (15), preferably a guide channel, of the reflector device (14); and
the coupling arm (16a) has a main extension direction (L) which is oriented along the guide direction (F).

2. Apparatus (10) according to claim 1, wherein:
a surface contact exists between the coupling arm (16a) and the guide section (15); and/or
a rolling bearing, preferably a linear ball bearing, is arranged between the coupling arm (16a) and the guide section (15).

3. Apparatus (10) according to claim 1 or 2, wherein the coupling device (16) further comprises:
a first coupling leg (16b) which is articulately connected to the first mounting leg (12a), preferably by means of a first rolling bearing;
a second coupling leg (16c) which is articulately connected to the second mounting leg (12b), preferably by means of a second rolling bearing; and
a hinge pin (16d), preferably plain-bearing mounted, by means of which the first and second coupling legs (16b, 16c) are articulately connected to one another and to which the coupling arm (16a) is furthermore articulated.

4. Apparatus (10) according to claim 3, wherein:
the coupling arm (16a) has: a first coupling-arm end through which the hinge pin (16d) extends, and a second coupling-arm end, preferably opposite the first coupling-arm end, which is displaceably guided in the guide section (15) along the guide direction (F); and/or
the coupling arm (16a) is arranged and/or guided in an angle-bisecting manner between the first and second coupling legs (16b, 16c); and/or
the coupling arm (16a) is arranged between the hinge pin (16d) and the reflector device (14).

5. Apparatus (10) according to any one of the preceding claims, wherein:
the coupling arm (16a) is plain-bearing mounted in the guide section (15); and/or
the guide section (15) is circumferentially closed in a plane perpendicular to the main extension direction (L); and/or
the guide section (15) surrounds the coupling arm (16a) in a plane perpendicular to the main extension direction (L).

6. Apparatus (10) according to any one of the preceding claims, wherein:
a portion of the coupling arm (16a) which is displaceably guided in the guide section (15) is configured, at least in sections, in a rod-shaped, preferably cuboid or cylindrical, manner and/or has, along its main extension direction, a substantially constant cross-section, preferably in the form of a rectangle with two straight longitudinal edges and two outwardly curved transverse edges; and/or
a portion of the coupling arm (16a) which is displaceably guided in the guide section (15) has, in a plane perpendicular to the main extension direction (L), an outer contour which is configured to correspond in shape to an inner contour of the guide section (15) in the plane perpendicular to the main extension direction (L); and/or
the guide section (15) supports the coupling arm (16a) at at least three different locations; and/or
the coupling arm (16a) is guided in the guide section (15) on at least three sides, preferably on at least four sides, along the guide direction (F); and/or
the guide section (15) has a plurality of guide surfaces (15a-15d) oriented parallel to the guide direction (F), wherein the plurality of guide surfaces (15a-15d) comprise:
two lateral guide surfaces (15a, 15b) which are preferably oriented parallel to one another; and/or
a base guide surface (15c) which is preferably oriented perpendicular to the two lateral guide surfaces (15a, 15b); and/or
a cover guide surface (15d) which is preferably oriented perpendicular to the two lateral guide surfaces (15a, 15b) and parallel to the base guide surface (15c).

7. Apparatus (10) according to any one of the preceding claims, wherein the reflector device (14) has a temperature-control device (17) which preferably:
comprises an inlet connection (17a) for a supply line, an outlet connection (17b) for a discharge line, and a cooling channel (17c) through which a temperature-control fluid can flow and which fluidically connects the inlet connection (17a) and the outlet connection (17b) to one another.

8. Apparatus (10) according to any one of the preceding claims, wherein the reflector device (14) comprises:
a reflection surface (14a) for deflecting the light and/or microwave beam (1), wherein preferably the reflection surface (14a) is oriented perpendicular to an angle bisector between the first and second coupling legs (16a, 16b); and
a reflection-surface carrier (14b) which carries the reflection surface (14a) and/or on which the reflection surface (14a) is mounted, preferably adjustably.

9. Apparatus (10) according to claim 8, wherein:
the reflector device (14) has an adjustment device (18) via which the reflection surface (14a) is connected to the reflection-surface carrier (14b) and by means of which a position and/or orientation of the reflection surface (14a) relative to the reflection-surface carrier (14b) is adjustable, wherein preferably the adjustment device (18) comprises:
a plurality of fine-adjustment screws and/or clamping screws with lock nuts; and/or
a removable, preferably dome-shaped, cover.

10. Apparatus (10) according to claim 8 or 9, wherein:
the reflection-surface carrier (14b) comprises the guide section (15); and/or
the guide section (15) is configured as a groove, through-hole or blind hole in the reflection-surface carrier (14b); and/or
the reflection-surface carrier (14b) is articulated to the first and second mounting legs (12a, 12b), preferably by means of a main pivot joint.

11. Apparatus (10) according to any one of the preceding claims, wherein:
the first mounting leg (12a) has a plurality of, preferably grid-like arranged, first through-holes (12a.1) for receiving first fastening elements (11a); and/or
the second mounting leg (12b) has a plurality of, preferably grid-like arranged, second through-holes (12b.1) for receiving second fastening elements (11b); and/or
an apex angle (σ) between the first and second mounting legs (12a, 12b) is between 50° and 130°; and/or
the first and second mounting legs (12a, 12b) are pivotable relative to one another, preferably continuously, within an apex-angle interval between 50° and 130°.

12. Apparatus (10) according to any one of the preceding claims, when dependent on claim 2, wherein:
the apparatus (10) further comprises:
a further first mounting leg (12a') for fastening to the first beam-guiding part (22a);
a further second mounting leg (12b') for fastening to the second beam-guiding part (22b), wherein the further first mounting leg (12a) and the further second mounting leg (12b) are articulately connected to one another; and
the coupling device (16) further comprises:
a further first coupling leg (16b') which is articulately connected to the further first mounting leg (12a);
a further second coupling leg (16c') which is articulately connected to the further second mounting leg (12a);
wherein the further first coupling leg (16b') and the further second coupling leg (16c') are articulately connected by means of the hinge pin (16d).

13. Apparatus (10) according to claim 12, wherein:
the further first mounting leg (12a') and the first mounting leg (12a) are arranged opposite one another, spaced apart from one another by a constant distance and/or coupled to one another in a motion-coupled manner; and/or
the further second mounting leg (12b') and the second mounting leg (12b) are arranged opposite one another, spaced apart from one another by a constant distance and/or coupled to one another in a motion-coupled manner; and/or
the further first coupling leg (16b') and the first coupling leg (16b) are arranged opposite one another, spaced apart from one another by a constant distance and/or coupled to one another in a motion-coupled manner; and/or
the further second coupling leg (16c') and the second coupling leg (16c) are arranged opposite one another, spaced apart from one another by a constant distance and/or coupled to one another in a motion-coupled manner.

14. System (20) for guiding a light and/or microwave beam (1), comprising:
a , preferably tubular, first beam-guiding part (22a);
a, preferably tubular, second beam-guiding part (22b); and
an apparatus (10) according to any one of the preceding claims, wherein a first mounting leg (12a) of the apparatus (10) is fastened to the first beam-guiding part (22a) and a second mounting leg (12b) of the apparatus (10) is fastened to the second beam-guiding part (22b), such that the first and second beam-guiding parts (22a, 22b) are articulately connected to one another by means of the apparatus (10).

15. System (20) according to claim 14, wherein the first and/or second beam-guiding part (22a, 22b):
has at least one pipe section; and/or
is telescopically length-adjustable; and/or
comprises an outer pipe section (22b.1), an inner pipe section (22b.2) and at least one, preferably annular, rolling bearing (21b), wherein the inner pipe section (22b.2) is inserted in a longitudinally displaceable manner in the outer pipe section (22b.1) and the at least one rolling bearing (21b) is arranged between the inner pipe section (22b.2) and the outer pipe section (22b.1).

16. System (20) according to claim 14 or 15, further comprising:
a further device (10') according to any one of claims 1 to 11; and
a third, preferably tubular, beam-guiding part (22c);
wherein a first mounting leg (12a) of the further device (10') is fastened to the second beam-guiding part (22b) and a second mounting leg (12b) of the further device (10') is fastened to the third beam-guiding part (22c), such that the second and third beam-guiding parts (22b, 22c) are articulately connected to one another by means of the further device (10');
wherein preferably:
the first and third beam-guiding parts (22a, 22c) each have a flange (23a, 23c), preferably rotatable, for fastening to a window flange of a vacuum system and are not telescopically length-adjustable; and
the second beam-guiding part (22b) is telescopically length-adjustable.

17. The system (20) according to claim 16, further comprising:
a yet further device (10ʺ) according to any one of the preceding claims; and
a fourth beam-guiding part (22d), preferably tubular;
wherein a first mounting leg (12a) of the yet further device (10ʺ) is fastened to the third beam-guiding part (22c) and a second mounting leg (12b) of the yet further device (10ʺ) is fastened to the fourth beam-guiding part (22d), such that the third and fourth beam-guiding parts (22b, 22c) are articulately connected to one another by means of the yet further device (10ʺ);
wherein preferably the first and fourth beam-guiding parts (22a, 22d) each have a flange (23a, 23d), preferably rotatable, for fastening to a window flange of a vacuum system and are not telescopically length-adjustable.

## Revendications

1. Dispositif (10) destiné à dévier un faisceau lumineux et/ou de micro-ondes (1), comprenant:
un premier bras de fixation (12a) destiné à être fixé à une première partie de guidage de faisceau (22a) ;
un deuxième bras de fixation (12b) destiné à être fixé à une deuxième partie de guidage de faisceau (22b), le premier bras de fixation (12a) et le deuxième bras de fixation (12b) étant reliés l'un à l'autre de manière articulée ;
un dispositif réflecteur (14) monté pivotant pour dévier le faisceau lumineux et/ou de micro-ondes (1) ; et
un dispositif de couplage (16), au moyen duquel le dispositif réflecteur (14), le premier bras de fixation (12a) et le deuxième bras de fixation (12b) sont reliés avec un couplage de mouvement l'un à l'autre, de telle sorte que, lors d'un pivotement du premier et du deuxième bras de fixation (12a, 12b) l'un par rapport à l'autre selon un angle de pivotement (α), le dispositif réflecteur (14) pivote d'un demi-angle de pivotement (α) par rapport au premier et au deuxième bras de fixation (12, 12b) ;
**caractérisé en ce que**
le dispositif de couplage (16) comporte un bras de couplage (16a) destiné à faire pivoter le dispositif réflecteur (14), lequel est guidé de manière coulissante, selon une direction de guidage (F), dans une section de guidage (15), de préférence un canal de guidage, du dispositif réflecteur (14) ; et
le bras de couplage (16a) présente une direction d'extension principale (L) qui est orientée selon la direction de guidage (F).

2. Dispositif (10) selon la revendication 1, dans lequel:
un contact surfacique est établi entre le bras de couplage (16a) et la section de guidage (15) ; et/ou
un roulement, de préférence un roulement linéaire à billes, est disposé entre le bras de couplage (16a) et la section de guidage (15).

3. Dispositif (10) selon la revendication 1 ou 2, dans lequel le dispositif de couplage (16) comporte en outre:
un premier bras de couplage (16b), qui est relié de manière articulée au premier bras de fixation (12a), de préférence au moyen d'un premier roulement ;
un deuxième bras de couplage (16c), qui est relié de manière articulée au deuxième bras de fixation (12b), de préférence au moyen d'un deuxième roulement ; et
un axe d'articulation (16d), monté de préférence sur un palier lisse, au moyen duquel le premier et le deuxième bras de couplage (16b, 16c) sont reliés de manière articulée l'un à l'autre et auquel le bras de couplage (16a) est en outre articulé.

4. Dispositif (10) selon la revendication 3, dans lequel:
le bras de couplage (16a) comporte: une première extrémité de bras de couplage, à travers laquelle s'étend l'axe d'articulation (16d), et une deuxième extrémité de bras de couplage, de préférence opposée à la première extrémité de bras de couplage, qui est guidée de manière coulissante dans la section de guidage (15) selon la direction de guidage (F) ; et/ou
le bras de couplage (16a) est disposé et/ou guidé entre le premier et le deuxième bras de couplage (16b, 16c) selon la bissectrice de l'angle ; et/ou
le bras de couplage (16a) est disposé entre l'axe d'articulation (16d) et le dispositif réflecteur (14).

5. Dispositif (10) selon l'une quelconque des revendications précédentes, dans lequel:
le bras de couplage (16a) est monté sur un palier lisse dans la section de guidage (15) ; et/ou
la section de guidage (15) est fermée sur sa périphérie dans un plan perpendiculaire à la direction d'extension principale (L) ; et/ou
la section de guidage (15) entoure le bras de couplage (16a) dans un plan perpendiculaire à la direction d'extension principale (L).

6. Dispositif (10) selon l'une quelconque des revendications précédentes, dans lequel:
la partie du bras de couplage (16a) qui est guidée de manière coulissante dans la section de guidage (15) est réalisée, au moins sur une partie de sa longueur, sous forme de tige, de préférence sous forme de parallélépipède ou de cylindre, et/ou présente, le long de sa direction d'extension principale, une section transversale sensiblement constante, de préférence sous la forme d'un rectangle comportant deux bords longitudinaux rectilignes et deux bords transversaux bombés vers l'extérieur ; et/ou
une section du bras de couplage (16a), qui est guidée de manière coulissante dans la section de guidage (15), présente, dans un plan perpendiculaire à la direction d'extension principale (L), un contour extérieur qui est réalisé de manière correspondante en forme à un contour intérieur de la section de guidage (15) dans le plan perpendiculaire à la direction d'extension principale (L) ; et/ou
la section de guidage (15) soutient le bras de couplage (16a) en au moins trois endroits différents ; et/ou
le bras de couplage (16a) est guidé dans la section de guidage (15), selon la direction de guidage (F), sur au moins trois côtés, de préférence sur au moins quatre côtés ; et/ou
la section de guidage (15) comporte plusieurs surfaces de guidage (15a-15d) orientées parallèlement à la direction de guidage (F), les plusieurs surfaces de guidage (15a-15d) comportant:
deux surfaces de guidage latérales (15a, 15b), qui sont orientées de préférence parallèlement l'une à l'autre ; et/ou
une surface de guidage de base (15c), qui est orientée de préférence perpendiculairement aux deux surfaces de guidage latérales (15a, 15b) ; et/ou
une surface de guidage supérieure (15d), qui est orientée de préférence perpendiculairement aux deux surfaces de guidage latérales (15a, 15b) et parallèlement à la surface de guidage de base (15c).

7. Dispositif (10) selon l'une quelconque des revendications précédentes, dans lequel le dispositif réflecteur (14) présente un dispositif de régulation de température (17) qui, de préférence:
comporte un raccord d'arrivée (17a) pour une conduite d'arrivée, un raccord d'évacuation (17b) pour une conduite d'évacuation et un canal de refroidissement (17c) pouvant être parcouru par un fluide de régulation de température, qui relie fluidiquement le raccord d'arrivée (17a) et le raccord d'évacuation (17b) l'un à l'autre.

8. Dispositif (10) selon l'une quelconque des revendications précédentes, dans lequel le dispositif réflecteur (14) comporte:
une surface de réflexion (14a) destinée à dévier le faisceau lumineux et/ou de micro-ondes (1), la surface de réflexion (14a) étant de préférence orientée perpendiculairement à une bissectrice entre le premier et le deuxième bras de couplage (16a, 16b) ; et
un support de surface de réflexion (14b), qui porte la surface de réflexion (14a) et/ou sur lequel la surface de réflexion (14a) est montée, de préférence de manière réglable.

9. Dispositif (10) selon la revendication 8, dans lequel:
le dispositif réflecteur (14) comporte un dispositif de réglage (18), par l'intermédiaire duquel la surface de réflexion (14a) est reliée au support de surface de réflexion (14b) et au moyen duquel une position et/ou une orientation de la surface de réflexion (14a) par rapport au support de surface de réflexion (14b) est réglable, le dispositif de réglage (18) comportant de préférence:
plusieurs vis de réglage fin et/ou vis de serrage avec contre-écrous ; et/ou
un couvercle amovible, de préférence en forme de dôme.

10. Dispositif (10) selon la revendication 8 ou 9, dans lequel:
le support de surface de réflexion (14b) comporte la section de guidage (15) ; et/ou
la section de guidage (15) est réalisée sous forme de rainure, de trou traversant ou de trou borgne dans le support de surface de réflexion (14b) ; et/ou
le support de surface de réflexion (14b) est articulé sur le premier et le deuxième bras de fixation (12a, 12b), de préférence au moyen d'une articulation rotative principale.

11. Dispositif (10) selon l'une quelconque des revendications précédentes, dans lequel:
le premier bras de fixation (12a) comporte plusieurs premiers trous traversants (12a.1), de préférence disposés en forme de grille, destinés à recevoir des premiers éléments de fixation (11a) ; et/ou
le deuxième bras de fixation (12b) comporte plusieurs deuxièmes trous traversants (12b.1), de préférence disposés en forme de grille, destinés à recevoir des deuxièmes éléments de fixation (11b) ; et/ou
un angle au sommet (σ) entre le premier et le deuxième bras de fixation (12a, 12b) est compris entre 50° et 130° ; et/ou
le premier et le deuxième bras de fixation (12a, 12b) peuvent pivoter l'un par rapport à l'autre dans un intervalle d'angle au sommet compris entre 50° et 130°, de préférence de manière continue.

12. Dispositif (10) selon l'une quelconque des revendications précédentes, lorsqu'il dépend de la revendication 2, dans lequel:
le dispositif (10) comporte en outre:
un autre premier bras de fixation (12a') destiné à être fixé à la première partie de guidage de faisceau (22a) ;
un autre deuxième bras de fixation (12b') destiné à être fixé à la deuxième partie de guidage de faisceau (22b), le premier bras de fixation supplémentaire (12a') et le deuxième bras de fixation supplémentaire (12b') étant reliés de manière articulée l'un à l'autre ; et le dispositif de couplage (16) comporte en outre:
un autre premier bras de couplage (16b'), qui est relié de manière articulée au premier bras de fixation supplémentaire (12a') ;
un autre deuxième bras de couplage (16c'), qui est relié de manière articulée au deuxième bras de fixation supplémentaire (12a) ;
le premier bras de couplage supplémentaire (16b') et le deuxième bras de couplage supplémentaire (16c') étant reliés de manière articulée au moyen de l'axe d'articulation (16d).

13. Dispositif (10) selon la revendication 12, dans lequel:
le premier bras de fixation supplémentaire (12a') et le premier bras de fixation (12a) sont disposés l'un en face de l'autre, sont espacés l'un de l'autre d'une distance constante et/ou sont couplés en mouvement l'un avec l'autre ; et/ou
le deuxième bras de fixation supplémentaire (12b') et le deuxième bras de fixation (12b) sont disposés l'un en face de l'autre, sont espacés l'un de l'autre d'une distance constante et/ou sont couplés en mouvement l'un avec l'autre ; et/ou
le premier bras de couplage supplémentaire (16b') et le premier bras de couplage (16b) sont disposés l'un en face de l'autre, sont espacés l'un de l'autre d'une distance constante et/ou sont couplés en mouvement l'un avec l'autre ; et/ou
le deuxième bras de couplage supplémentaire (16c') et le deuxième bras de couplage (16c) sont disposés l'un en face de l'autre, sont espacés l'un de l'autre d'une distance constante et/ou sont couplés en mouvement l'un avec l'autre.

14. Système (20) destiné au guidage d'un faisceau lumineux et/ou de micro-ondes (1), comprenant:
une première partie de guidage de faisceau (22a), de préférence tubulaire ;
une deuxième partie de guidage de faisceau (22b), de préférence tubulaire ; et
un dispositif (10) selon l'une quelconque des revendications précédentes, dans lequel un premier bras de fixation (12a) du dispositif (10) est fixé à la première partie de guidage de faisceau (22a) et un deuxième bras de fixation (12b) du dispositif (10) est fixé à la deuxième partie de guidage de faisceau (22b), de sorte que la première et la deuxième partie de guidage de faisceau (22a, 22b) sont reliées de manière articulée l'une à l'autre au moyen du dispositif (10).

15. Système (20) selon la revendication 14, dans lequel la première et/ou la deuxième partie de guidage de faisceau (22a, 22b):
présente au moins une section de tube ; et/ou
est réglable en longueur de manière télescopique ; et/ou présente une section de tube extérieur (22b.1), une section de tube intérieur (22b.2) et au moins un roulement (21b), de préférence annulaire, le section de tube intérieur (22b.2) étant insérée de manière coulissante longitudinalement dans la section de tube extérieur (22b.1) et l'au moins un roulement (21b) étant disposé entre la section de tube intérieur (22b.2) et la section de tube extérieur (22b.1).

16. Système (20) selon la revendication 14 ou 15, comportant en outre:
un autre dispositif (10') selon l'une quelconque des revendications 1 à 11 ; et
une troisième partie de guidage de faisceau (22c), de préférence tubulaire ;
dans lequel un premier bras de fixation (12a) de l'autre dispositif (10') est fixé à la deuxième partie de guidage de faisceau (22b) et un deuxième bras de fixation (12b) de l'autre dispositif (10') est fixé à la troisième partie de guidage de faisceau (22c), de sorte que la deuxième et la troisième partie de guidage de faisceau (22b, 22c) sont reliées de manière articulée l'une à l'autre au moyen de l'autre dispositif (10') ;
où de préférence:
la première et la troisième partie de guidage de faisceau (22a, 22c) comportent chacune une bride (23a, 23c), de préférence rotative, destinée à la fixation à une bride de fenêtre d'une installation sous vide et ne sont pas réglables en longueur de manière télescopique ; et
la deuxième partie de guidage de faisceau (22b) est réglable en longueur de manière télescopique.

17. Système (20) selon la revendication 16, comportant en outre:
un dispositif encore supplémentaire (10") selon l'une quelconque des revendications précédentes ; et
une quatrième partie de guidage de faisceau (22d), de préférence tubulaire ;
dans lequel un premier bras de fixation (12a) du dispositif encore supplémentaire (10") est fixé à la troisième partie de guidage de faisceau (22c) et un deuxième bras de fixation (12b) du dispositif encore supplémentaire (10") est fixé à la quatrième partie de guidage de faisceau (22d), de sorte que la troisième et la quatrième partie de guidage de faisceau (22b, 22c) sont reliées de manière articulée l'une à l'autre au moyen du dispositif encore supplémentaire (10") ;
dans lequel de préférence la première et la quatrième partie de guidage de faisceau (22a, 22d) comportent chacune une bride (23a, 23d), de préférence rotative, destinée à la fixation à une bride de fenêtre d'une installation sous vide et ne sont pas réglables en longueur de manière télescopique.
